# EUROPEAN PATENT SPECIFICATION

(11) **EP 3 398 293 B1**
(45) Date of publication and mention of the grant of the patent: **19.06.2019**
(21) Application number: 15820542.7
(22) Date of filing: 29.12.2015
(51) Int. Cl.: H04L 12/24, H04W 48/18, H04W 24/08, H04W 84/04, H04W 88/16, H04W 76/11, H04M 15/00

(54) **CHANGE OF RADIO ACCESS NETWORK IN A NETWORK SHARING ARCHITECTURE**
ÄNDERUNG DES FUNKZUGRIFFNETZWERKS IN EINER NETZWERKTEILUNGSARCHITEKTUR
CHANGEMENT DE RÉSEAU D'ACCÈS RADIO DANS UNE ARCHITECTURE DE PARTAGE DE RÉSEAU

(43) Date of publication of application: 07.11.2018
(73) Proprietor: Telefonaktiebolaget LM Ericsson (PUBL), 164 83 Stockholm (SE)
(72) Inventor: FERNANDEZ ALONSO, Susana, 28009 Madrid (ES); RIVAS MOLINA, Ignacio, 28045 Madrid (ES); YANG, Yong, 42836 Kallered (SE)
(74) Representative: Ericsson
(86) International application number: PCT/EP2015/081342
(87) International publication number: WO 2017/114561

(56) References cited:
- EP-A1- 2 613 597
- WO-A1-2014/086431
- US-A1- 2015 071 125
- "3rd Generation Partnership Project; Technical Specification Group Services and System Aspects; Network sharing; Architecture and Functional Description (Release 6)", 3GPP DRAFT; 23851-610, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 23 July 2013 (2013-07-23), XP050725601, Retrieved from the Internet: URL:http://www.3gpp.org/ftp/tsg_sa/WG2_Arc h/Latest_SA2_Specs/Rel-6/ [retrieved on 2013-07-23]
- "3rd Generation Partnership Project; Technical Specification Group Services and System Aspects; Network Sharing; Architecture and functional description (Release 13)", 3GPP DRAFT; 23251-D10_CR_IMPLEMENTED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 27 February 2015 (2015-02-27), XP050966481, Retrieved from the Internet: URL:http://www.3gpp.org/ftp/tsg_sa/WG2_Arc h/Latest_SA2_Specs/DRAFT_INTERIM/Archive/ [retrieved on 2015-02-27] cited in the application

## Description

### TECHNICAL FIELD

The present invention generally relates to network sharing; and, more specifically, the invention relates to a change of a Radio Access Network in a network sharing scenario.

### BACKGROUND

3GPP TS 23.251 V13.1.0 has specified Network Sharing for GERAN, UTRAN and E-UTRAN accesses. Network sharing architecture allows different core networks, i.e. core networks from different operators, to connect to a shared radio access network. Two architectures have been identified: Gateway Core Network, GWCN, (MSCs/SGSNs/MMEs are also shared), and Multi-Operator Core Network, MOCN (only the radio access network is shared). In both architectures the Radio Access Network (RAN) is shared by more than one Core Network (CN).

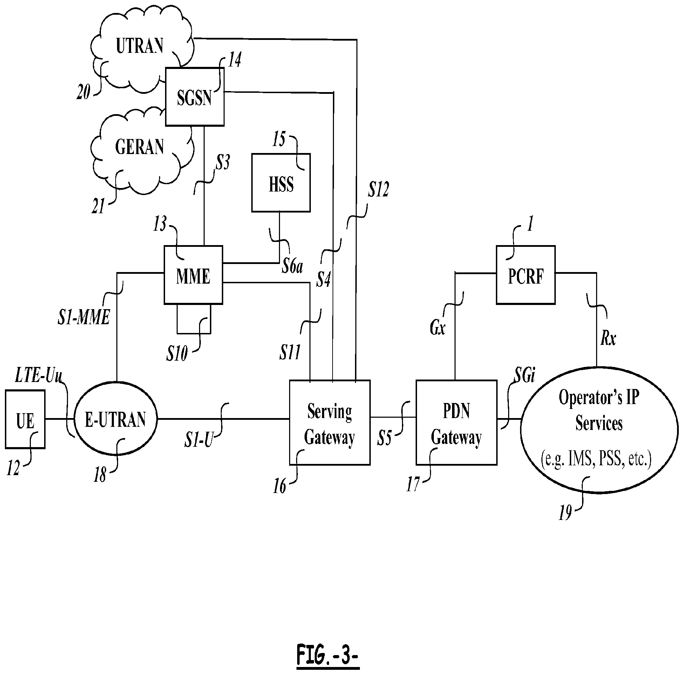

3GPP TS 23.401 V13.4.0 specifies, and Fig. 3 illustrates, an exemplary 3GPP Evolved Packet System (EPS) Architecture with Long Term Evolution (LTE) as RAN. This may be a scenario where the radio access network is shared.

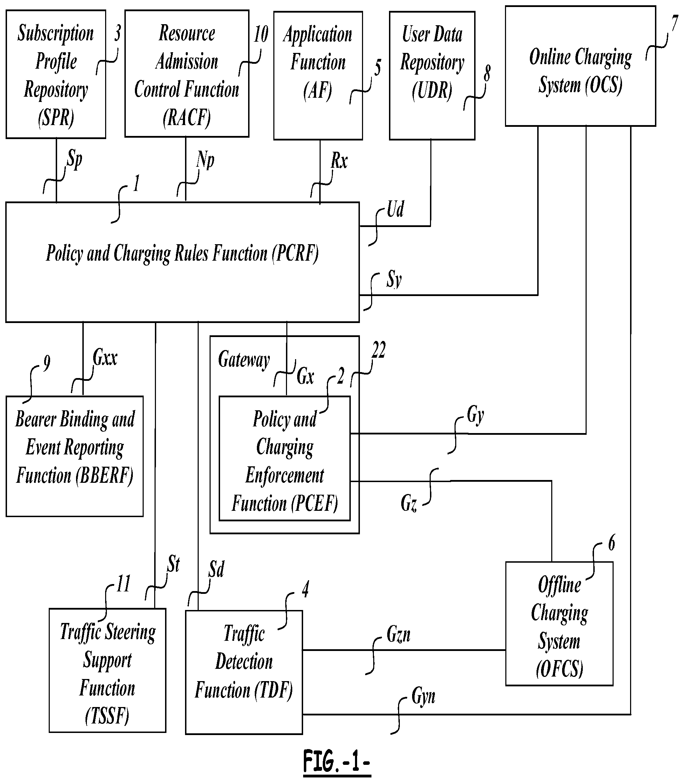

The architecture supporting Policy and Charging Control (PCC) functionality is illustrated in Fig. 1 and disclosed in 3GPP TS 23.203 V13.5.1 that specifies the PCC functionality for Evolved 3GPP Packet Switched domain, including both 3GPP accesses (GERAN/UTRAN/E-UTRAN) and Non-3GPP accesses. For the purpose of embodiments further discussed, the PCC architecture includes a Policy and Charging Rules Function (PCRF), and a Policy and Charging Enforcement Function (PCEF).

The PCRF is a functional element in charge of policy control decision and flow based charging control, and provides network control for service data flow detection, gating, quality of service (QoS) and flow based charging towards the PCEF by holding policies and providing PCC rules, via the Gx reference point, to the PCEF per service data flow basis for enforcement of such policies. The PCRF receives session and media related information from the AF and informs AF of traffic plane events.

The PCEF encompasses service data flow detection, policy enforcement and flow based charging functionalities by enforcing the PCC rules received from the PCRF.

The PCRF can subscribe in the PCEF (e.g. a PDN Gateway in Fig. 3 comprising the PCEF) to events that can occur in the network and the PCEF would report the PCRF when the related event occurs. For instance, when the PCRF subscribes to events related to a change of Public Land Mobile Network (PLMN), by transmitting the event trigger "PLMN_Change" to the PCEF, the PLMN information is received at the PCRF as part of the 3GPP-SGSN-MCC-MNC AVP in the Gx interface. Also for instance, when the PCRF subscribes to changes in the user location, by transmitting the event trigger "User_Location Change" to the PCEF, the PLMN information is also received at the PCRF as part of the 3GPP-User-Location-Information AVP in the Gx interface.

In conventional deployments, the PLMN in both 3GPP-SGSN-MCC-MNC AVP and 3GPP-User-Location-Information AVP is the same, since the operator of the Core Network also owns the Radio Access Network, so that this PLMN information should equally correspond to both CN PLMN and RAN PLMN.

If the PCRF has policies related to the PLMN, the PCRF would subscribe to PLMN changes, rather than subscribing to location changes, in order to avoid the signaling penalty suffered when subscribing to location changes since, in this case, the PCRF would be informed whenever a user equipment (UE) changes the cell/routing area/serving area. It is a common practice in the mobile or cellular networks to never subscribe to location changes to avoid so much traffic in the network. For example, WO2014/086431 A1 discloses a method for a selective event reporting in a mobile telecommunications network, whereby a second node may send an indication to a first node, thereby subscribing to reporting of a certain event type by the first node, wherein this indication may for example specify that a change in type of radio access technology, to be reported from the first node to the second node.

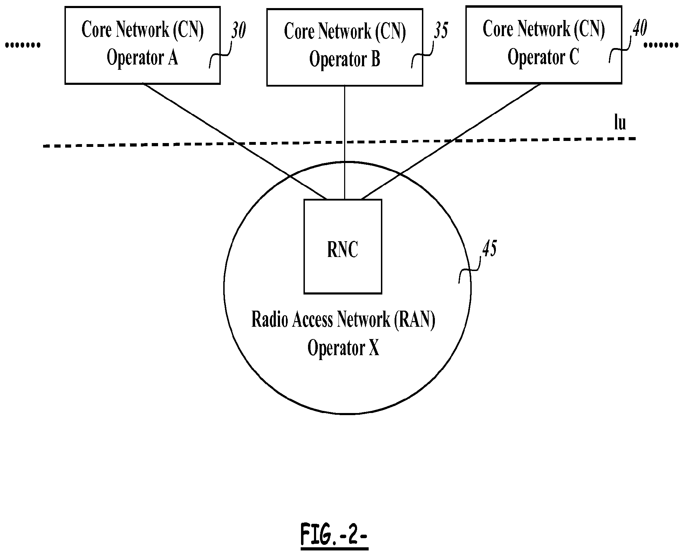

When network sharing is deployed, several core network (CN) operators can share one radio access network (RAN), as illustrated in Fig. 2. In this case, the PLMN related to the RAN may differ from the PLMN of the CN selected by or allocated to the UE. In particular, there may be cases where a CN operator might own the RAN in an area, e.g. in an urban area, whereas another operator owns the RAN in other areas, e.g. rural areas. For example, EP 2 613 597 A1 discloses RAN sharing deployments wherein the RAN is shared but the network node (e.g. MME/SGSN) interfacing the RAN is not shared and is owned by the same operator that the PCRF. Thus the identifiers of the policy area may be configured by cooperative management between the PCRF and the nodes (e.g. MME/SGSN) interfacing the RAN.

In this respect and for the sake of clarity throughout this specification, the CN selected by a UE to attach thereto, when more than one CN is available for the UE, or the CN allocated by the network to he UE, is hereinafter referred to as the 'serving core network' (SN).

If the PCRF has policies related to the PLMN where the user is located, it would subscribe to notification of PLMN changes with the PLMN_Change event trigger. However, the PCRF would receive the PLMN identifier corresponding to the PLMN of the CN operator. Thus, in network sharing scenarios with a shared RAN, it is not possible to apply policies related to the actual PLMN where the user is located, i.e. the RAN PLMN. In other words, in shared network deployments, the PCRF is not aware if the UE is really located in the PLMN received in the 3GPP-SGSN-MCC-MNC AVP or in a different one, and the applied policies might be incorrect.

Moreover, mobile network operators often make use of the PLMN-ID to detect when the subscriber is roaming and apply different policies. However, in shared networks the PLMN information that is sent as part of the 3GPP-SGSN-MCC-MNC AVP may correspond to the CN PLMN and may not actually correspond to the actual geographical location where the subscriber is located, i.e. the RAN PLMN.

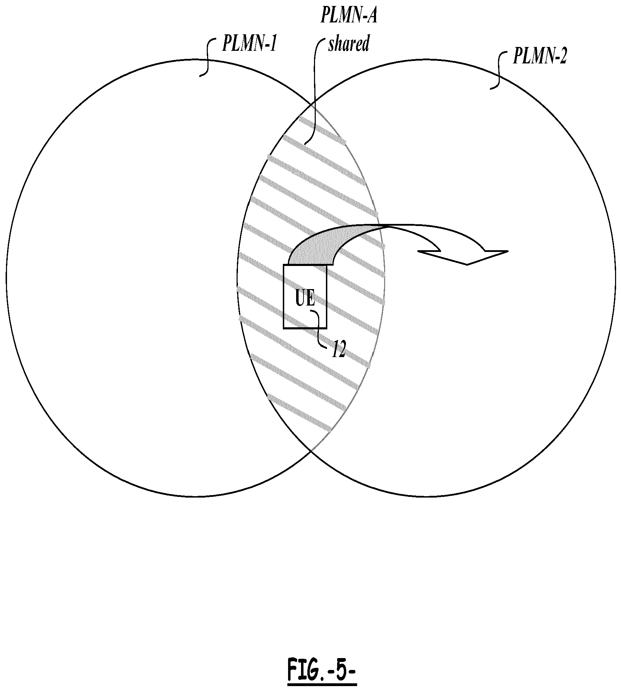

For example, as illustrated in Fig. 5, a first operator may own PLMN-1 that includes CN and RAN, a second operator may own PLMN-2 that includes CN and RAN, and a third RAN operator may own PLMN-A that only includes RAN, and which is shared by first and second operators for the overlapping area.

In the overlapping area, three PLMN identifiers are broadcast over air: PLMN-1, PLMN-2 and PLMN-A. If the UE has a subscription with PLMN-2, roams in the overlapping area and supports network sharing, the UE will select PLMN-2 to register in the CN of PLMN-2 and will use the RAN of PLMN-A. In this situation, the serving core network for the UE is the CN of PLMN-2. This serving core network, i.e. CN of PLMN-2, might not be aware of PLMN-A. Moreover, if the UE roams out of the overlapping area into the RAN area of PLMN-2, there is a PLMN change that should be reported, namely from RAN PLMN-A to RAN PLMN-2. However, subscribing to notification of PLMN changes would not inform of this situation because the serving core network (SN) is still the same, the CN PLMN-2.

The issue can be solved by subscribing to location changes instead. However, it will require that the PCRF always subscribes to location changes instead of PLMN changes, since the PCRF ignores when network sharing applies. This would generate a strong penalty in performance, since all the location changes, which could correspond to cell changes, will be reported even without network sharing.

There is thus a need to find an alternative mechanism to notify the PCRF of a change of PLMN in a network sharing scenario without using the existing subscription to location changes, which generally penalizes the performance.

### SUMMARY

The present invention is aimed to at least minimize the above drawbacks and provides for a new method for network sharing and enhanced network node, network device and policy control rules server.

In accordance with a first aspect of the present invention, there is provided a method for notifying a policy control rules server, which handles policies related to a radio access network, RAN, of a shared RAN used to connect a user equipment, UE, with a serving core network.

This method comprises, at a network node of a serving core network, receiving a request for establishment or modification of a network connection between a UE and the serving core network through a shared RAN, and transmitting towards a policy control rules server handling policies related to the shared RAN, an identifier of the serving core network, an identifier of the RAN and, optionally, an indicator indicating a RAN sharing. The RAN sharing indicator is advantageous to immediately let the policy control rules server know there is an identifier of the RAN along with the identifier of the serving core network. On the other hand, receiving the identifier of the RAN is indicative of a RAN sharing.

This method comprises, at the policy control rules server, determining that policies related to the identifier of the RAN exist, and transmitting towards a network device handling subscriptions to events, an event trigger subscribing to notifications of a RAN change.

This method comprises, at the network device, monitoring whether the identifier of the RAN changes in order to notify the policy control rules server of a new identifier of the RAN.

In particular, the new event trigger may be RAN_PLMN_Change. Also in particular, the identifier of the serving core network maybe a serving-PLMN-ID and the identifier of the RAN may be a RAN-PLMN-ID.

In some embodiments, the policy control rules server may be a server implementing a Policy and Charging Rules Function, PCRF, of the PCC architecture.

In different embodiments or situations, the network node may be any one of a Mobility Management Entity, MME, a Serving GPRS Support Node supporting a so-called Gn/Gp interface, hereinafter SGSN, a Serving GPRS Support Node supporting a so-called S4 interface, hereinafter S4-SGSN, a Serving Network Gateway, SGW, a Packet Data Network Gateway, PGW, and a Gateway GPRS Support Node, GGSN.

Advantageously, for example in order to optimize the mapping of signalling between an interface and another, the method may comprise, at the network node, determining that the RAN is a shared network, prior to transmitting the identifier of the serving core network, the identifier of the RAN and, optionally, the indicator indicating the RAN sharing.

In one embodiment, the identifier of the serving core network, the identifier of the RAN and, optionally, the indicator indicating the RAN sharing are transmitted from the network node towards the policy control rules server through one or more gateway nodes. Where this is the case, the one or more gateway nodes may comprise any ones of a SGW, a PGW and a GGSN.

In another embodiment, the identifier of the serving core network, the identifier of the RAN and, optionally, the indicator indicating the RAN sharing are directly transmitted from the network node towards the policy control rules server via direct interface. When this is the case, the network device may reside in the network node.

In particular, when the network device resides in any one of the PGW and the GGSN, the network device may implement a Policy and Charging Enforcement Function, PCEF, of the PCC architecture.

Generally speaking, if the network device resides in a gateway node, the method may further comprise transmitting towards the network node, from the network device or from the gateway node, an indication requesting to be notified of a RAN change.

In accordance with a second aspect of the present invention, there is provided a system for notifying a policy control rules server, which handles policies related to a radio access network, RAN, of a shared RAN used to connect a user equipment, UE, with a serving core network.

This system comprises a network node of the serving core network, a policy control rules server handling one or more policies related to the shared RAN, and a network device handling subscriptions to events, they all contributing to carry out the above method.

In this system, the network node of the serving core network is configured to receive a request for establishment or modification of a network connection between a UE and the serving core network through a shared RAN, and transmit, towards the policy control rules server, an identifier of the serving core network, an identifier of the RAN and, optionally, an indicator indicating a RAN sharing. As commented above, the RAN sharing indicator is advantageous to immediately let the policy control rules server know there is an identifier of the RAN along with the identifier of the serving core network. On the other hand, receiving the identifier of the RAN is indicative of the RAN sharing.

In this system, the policy control rules server is configured to receive, from the network node of the serving core network, the identifier of the serving core network, the identifier of the RAN and, optionally, the indicator indicating the RAN sharing, determine that one or more policies related to the identifier of the RAN exist, and transmit, towards the network device, an event trigger subscribing to notifications of a RAN change.

In this system, the network device is configured to receive, from the policy control rules server, the event trigger subscribing to notifications of a RAN change, and monitor whether the identifier of the RAN changes in order to notify the policy control rules server of a new identifier of the RAN.

As for the above method, also for this system, the new event trigger may be RAN_PLMN_Change. Also for this system, the identifier of the serving core network may be a serving-PLMN-ID and the identifier of the RAN may be a RAN-PLMN-ID.

In this system, the policy control rules server may be a server implementing a Policy and Charging Rules Function, PCRF, of the PCC architecture.

In different embodiments or situations for the above method to be carried out, the network node of this system may be any one of a Mobility Management Entity, MME, a Serving GPRS Support Node supporting a so-called Gn/Gp interface, hereinafter SGSN, a Serving GPRS Support Node supporting a so-called S4 interface, hereinafter S4-SGSN, a Serving Network Gateway, SGW, a Packet Data Network Gateway, PGW, and a Gateway GPRS Support Node, GGSN.

In this system, the network node of the serving core network may be configured to determine that the RAN is a shared network, prior to transmitting the identifier of the serving core network, the identifier of the RAN and, optionally, the indicator indicating the RAN sharing.

In an embodiment of this system, the identifier of the serving core network, the identifier of the RAN and, optionally, the indicator indicating the RAN sharing may be directly transmitted from the network node towards the policy control rules server via a direct interface. When this is the case, the network device may reside in the network node; and the network node may be configured to receive, from the policy control rules server, an event trigger subscribing to notifications of a RAN change, and monitor whether the identifier of the RAN changes in order to notify the policy control rules server of a new identifier of the RAN.

In another embodiment, the system may further comprise one or more gateway nodes configured to receive, from the network node, the identifier of the serving core network, the identifier of the RAN and, optionally, the indicator indicating the RAN sharing, and transmit, towards the policy control rules server, the identifier of the serving core network, the identifier of the RAN and, optionally, the indicator indicating the RAN sharing.

In this another embodiment, the one or more gateway nodes may comprise any ones of a SGW, a PGW and a GGSN. In particular, where the network device resides in one of the PGW and the GGSN, the network device may implement a Policy and Charging Enforcement Function, PCEF, of the PCC architecture.

More generally and aligned with the above method, if the network device resides in a gateway node, the network device or the gateway node, may be configured to transmit towards the network node, an indication requesting to be notified of a RAN change, in order to further notify the policy control rules server of a new identifier of the RAN.

In accordance with a third aspect of the present invention, there is provided a network node of a serving core network, and constituent of the above system, for notifying a policy control rules server, which handles policies related to a radio access network, RAN, of a shared RAN used to connect a user equipment, UE, with a serving core network.

This network node, in an embodiment, may comprise a processor and a memory, said memory containing instructions executable by said processor, whereby said network node is operative to: receive a request for establishment or modification of a network connection between a UE and a serving core network through a shared RAN; and transmit, towards a policy control rules server, an identifier of the serving core network, an identifier of the RAN and, optionally, an indicator indicating a RAN sharing.

This network node, in another embodiment, may comprise a RAN handler module configured to receive via a receiver the request for establishment or modification of the network connection between the UE and the serving core network through the shared RAN, and configured to transmit, via a transmitter and towards the policy control rules server, the identifier of the serving core network, the identifier of the RAN and, optionally, the indicator indicating the RAN sharing.

This network node may further be operative to: receive, from a gateway node, an indication requesting to be notified of a RAN change; and monitor whether the identifier of the RAN changes in order to notify the gateway node of a new identifier of the RAN.

In accordance with a fourth aspect of the present invention, there is provided a policy control rules server handling policies related to a radio access network, RAN, the RAN being used to connect a user equipment, UE, with a serving core network.

This policy control rules server, in an embodiment, may comprise a processor and a memory, the memory containing instructions executable by the processor, whereby said policy control rules server is operative to: receive, from a network node of a serving core network, an identifier of the serving core network, an identifier of the RAN and, optionally, an indicator indicating a RAN sharing; determine that policies related to the identifier of the RAN exist; and transmit, towards a network device handling subscriptions to events, an event trigger subscribing to notifications of a RAN change.

This policy control rules server, in another embodiment, may comprise a RAN handler module configured to receive, via a receiver, the identifier of the serving core network, the identifier of the RAN and, optionally, the indicator indicating the RAN sharing; and a policies handler module configured to determine that policies related to the identifier of the RAN exist and transmit, towards the network device via a transmitter, the event trigger subscribing to notifications of a RAN change.

In accordance with a fifth aspect of the present invention, there is provided network device for handling subscriptions to events, the network device residing in at least one of a network node of a serving core network and a gateway node.

This network device, in an embodiment, may comprise a processor and a memory, the memory containing instructions executable by the processor, whereby said network device is operative to: receive, from a policy control rules server, an event trigger subscribing to notifications of a RAN change, and monitor whether an identifier of the RAN changes in order to notify the policy control rules server of a new identifier of the RAN.

This network device, in another embodiment, may comprise a monitoring handler module configured to handle the event trigger received via a receiver and monitor whether the identifier of the RAN changes, and a notifications handler module configured to notify the policy control rules server, via a transmitter, of a new identifier of the RAN when there is a change of RAN.

This network device, where residing in a gateway node, may further be operative to transmit, to a network node of a serving core network, an indication requesting to be notified of a RAN change.

On the other hand, the invention may be practised by one or more computer programs, in accordance with a sixth aspect of the invention, each computer program being loadable into an internal memory of a computer with input and output units, which may be a receiver and a transmitter, as well as with a processor, and comprising instructions executable by the processor to carry out at least some of the above method steps. In particular, each computer program may be recorded in a carrier readable in a computer.

As used herein, the word "comprising" does not exclude the presence of other elements or steps than those listed and the words "a" or "an" preceding an element do not exclude the presence of a plurality of such elements. Further, any reference signs do not limit the scope of the claims; the invention may be at least in part implemented by means of both hardware and software; and several "means", "modules" or "units" may be represented by a same item of hardware. The embodiments described and mentioned throughout this specification are given as examples of the present invention and are not intended to limit the present invention.

### BRIEF DESCRIPTION OF THE DRAWINGS

The features, objects and advantages of the invention will become apparent by reading this description in conjunction with the accompanying drawings, in which:
FIG. 1 basically represents the functional elements of a PCC architecture.
FIG. 2 shows a network sharing architecture wherein more than one core network share a radio access network.
FIG. 3 shows an exemplary 3GPP EPS Architecture with LTE as RAN.
FIG. 4 shows a proprietary architecture with a direct interface Sx between a PCRF and network nodes of a serving core network.
FIG. 5 shows an exemplary network sharing, wherein two PLMNs with CN and RAN overlap and, in the overlapping area, share the RAN of a third operator.
FIG. 6 shows a component structure of a network node of a serving core network in accordance with an embodiment.
FIG. 7 shows a component structure of a network device in accordance with an embodiment.
FIG. 8 shows a component structure of a policy control rules server in accordance with an embodiment.
FIG. 9 shows a component structure of a gateway node in accordance with an embodiment.
FIG. 10 illustrates an exemplary sequence of actions carried out in an EPS deployment with E-UTRAN as radio network to notify a PCRF of a shared RAN, in accordance with an embodiment.
FIG. 11 illustrates an exemplary sequence of actions carried out in an EPS deployment with E-UTRAN as radio network to notify a PCRF of a shared RAN, in accordance with another embodiment aligned with the proprietary architecture shown in Fig. 4.
FIG. 12 shows a basic component structure of a network node of a serving core network in accordance with another embodiment.
FIG. 13 shows a basic component structure of a network device in accordance with another embodiment.
FIG. 14 shows a basic component structure of a policy control rules server in accordance with another embodiment.
FIG. 15 illustrates a method for notifying a policy control rules server of a shared RAN used to connect a UE with a serving core network.
FIG. 16 shows a basic component structure of a gateway node in accordance with another embodiment.
FIG. 17 schematically shows an exemplary identifier of a serving core network.
FIG. 18 illustrates complementary steps in accordance with an embodiment of a method for notifying a policy control rules server of a shared RAN used to connect a UE with a serving core network.

### DETAILED DESCRIPTION

The following describes currently preferred embodiments of enhanced network node, network device and policy control rules server as well as a method for network sharing.

In particular, the policy control rules server 1a may be a network element arranged for carrying out the functionality of a PCRF 1, i.e. a PCRF server, in accordance with conventional PCC standards; the network device may be a network element arranged for carrying out the functionality of a PCEF 2, i.e. a PCEF device, in accordance with conventional PCC standards; and the network node may be a network element arranged for carrying out the functionality of at least one of an MME, an SGSN and an S4-SGSN in accordance with conventional EPS standards.

Prior to discussing embodiments and main actors of the invention, some aspects of the architectures involved are discussed to better orientate the reader.

Generally speaking, the PCC architecture is illustrated in Fig. 1. A central entity of the PCC architecture is the PCRF 1 in communication with a Subscription Profile Repository (SPR) 3 via an Sp reference point; in communication with a Resource Admission Control Function (RACF) 10 via an Np reference point; in communication with an Application Function (AF) 5 via an Rx reference point; in communication with a User Data Repository (UDR) 8 via a Ud reference point; in communication with an Online Charging System (OCS) 7 via an Sy reference point; in communication with an Application Function (AF) 5 via an Rx reference point; in communication with a Bearer Binding and Event Reporting Function (BBERF) 9 via a Gxx reference point; in communication with a Traffic Steering Support Function (TSSF) 11 via an St reference point; in communication with a Traffic Detection Function (TDF) 4 via an Sd reference point; in communication with a PCEF 2, which may reside in Gateway 22, via a Gx reference point. In addition, the TDF 4 is in communication with an Offline Charging System (OFCS) 6 via a Gzn reference point and is in communication with the OCS 7 via a Gyn reference point. Also in addition, the PCEF 2 is in communication with an OFCS 6 via a Gz reference point and is in communication with the OCS 7 via a Gy reference point.

Fig. 2 illustrates an exemplary network sharing scenario wherein three different CNs, i.e. CN 30 of operator A, CN 35 of operator B and CN 40 of operator C share a same RAN 45 of operator X.

Particularly in respect of Fig. 2, 3GPP TR 23.707 studies and evaluates architectural enhancements required to support dedicated core networks within the scope of an ongoing Rel-13 work item called DECOR. This feature enables an operator to deploy multiple core networks within a PLMN, wherein each core network is dedicated for a specific type of subscribers, devices or customers and with different characteristics, such as machine type devices, Mobile Virtual Network Operator (MVNO), data usage, specific enterprise, etc.

These dedicated core networks (DECOR) may be used by an operator in combination with network sharing. Where the MOCN architecture, commented above for network sharing, applies along with DECOR, each operator may deploy one or more dedicated core networks sharing a same RAN network owned by the same operator or another. For example, the Fig. 2 may be interpreted as if the CN 30 of operator A and the CN 35 of operator B respectively correspond to a first dedicated CN network of operator D and a second dedicated CN network of operator D.

Further examples of dedicated core networks along with network sharing, where the present invention is applicable, are 'Network Slicing' and 'Cellular Internet of Things (CIoT)'.

Network slicing is an evolution of the concept of dedicated core networks, from a business perspective, that also introduces the concepts of network function virtualization (NFV), software defined networks (SDN) and network management (orchestration). Network slicing may be regarded as a logical network serving a defined business purpose or customer, consisting of all required network resources configured together. It is created, changed and removed by management functions. In this context, "network resources" may be any physical or virtual, dedicated or shared network resource.

The CIoT is a specific case of dedicated networks and is disclosed in 3GPP TR 23.270 v1.2.0. An operator offering CIoT can have separate core networks for Mobile Broadband (MBB) and CIoT that can be identified by a same or different PLMN Identifier. When network sharing applies, the radio network can be identified by a PLMN Identifier that is different than the PLMN Identifiers representing the slices and/or dedicated core networks.

FIG. 3 shows an exemplary 3GPP EPS Architecture with LTE as RAN, for which embodiments of the invention are further discussed. As illustrated in Fig. 3, a UE 12 connects through E-UTRAN 18 with the packet core network. Other possible accesses to the packet core network may be UTRAN 20 or GERAN 21. The packet core network may comprise an MME 13, an SGSN 14, or both. The MME is connected with E-UTRAN via interface SI-MME, with the SGSN via interface S3, with the HSS 15 via interface S6a, and with the SGW 16 via interface S11. The SGW 16 is also connected with the SGSN via interface S4 (i.e. the illustrated SGSN is in fact an S4-SGSN), with UTRAN via interface S12, and with a PGW 17 via interface S5. The PGW is connected with a PCRF 1 via interface Gx, and with Operator's IP services 19 via interface SGi. The PCRF is also connected with the Operator's IP services 19 via interface Rx.

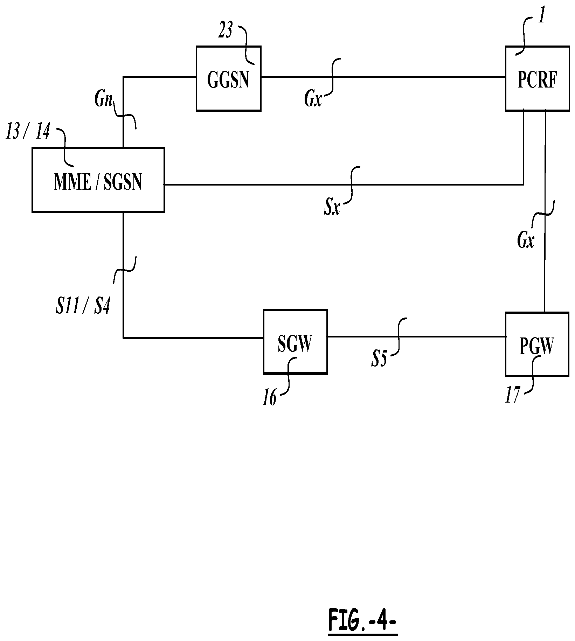

FIG. 4 shows a proprietary architecture with a direct interface Sx between a PCRF and network nodes of a serving core network. As illustrated in Fig. 4, any one of MME 13, SGSN or S-GSN 14, individually or co-located, are connected with a GGSN 23 via interface Gn, with a SGW 16 via respective interfaces S11 or S4, and with a PCRF 1 via a direct interface Sx. The GGSN 23 is connected with the PCRF 1 via interface Gx, the SGW 16 is connected with the PGW 17 via interface S5, and the PGW 17 is connected with the PCRF 1 via interface Gx.

In this respect, particular embodiments are discussed throughout this specification depending on whether communications between the MME/SGSN and the PCRF are directly transmitted over the Sx interface or through the gateways SGW and PGW, or GGSN.

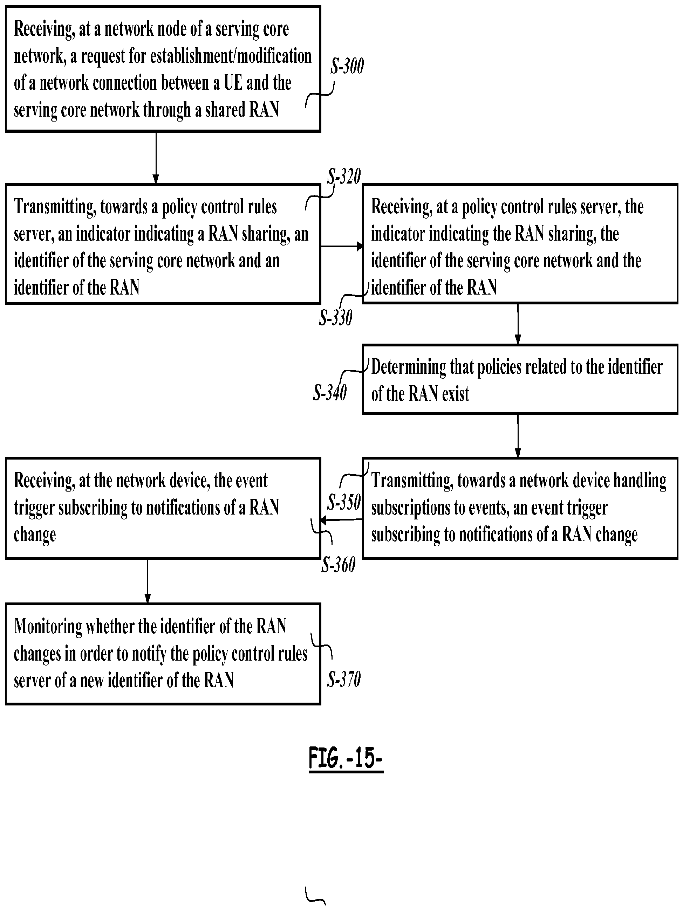

Generally speaking, Fig. 15 illustrates the overall method for notifying a policy control rules server 1a of a shared RAN used to connect a UE with a serving core network. The policy control rules server handles policies related to different RANs and, in particular, one or more policies related to the shared RAN. In an embodiment, the policy control rules server 1a may be a PCRF server 1 of the PCC architecture.

In this method, at a network node 60 of the serving core network, there is a step S-300 of receiving a request for establishment or modification of a network connection, between the UE and the serving core network, through a shared RAN, and there is a step S-320 of transmitting, from the network node 60 towards the policy control rules server 1a, an identifier of the serving core network, an identifier of the RAN and, optionally, an indicator indicating a RAN sharing.

Upon receipt of the identifier of the serving core network, the identifier of the RAN and, optionally, the indicator indicating the RAN sharing during a step S-330, the method comprises, at the policy control rules server 1a, a step S-340 of determining that one or more policies related to the identifier of the RAN exist, and a step S-350 of transmitting, towards a network device 2a handling subscriptions to events, an event trigger subscribing to notifications of a RAN change. In this respect, the event trigger is submitted during establishment of the network connection and may not be submitted during modification of the network connection, if the modification does not imply a different RAN.

Upon receipt of the event trigger subscribing to notifications of a RAN change during a step S-360, the method includes at the network device 2a a step S-370 of monitoring whether the identifier of the RAN changes in order to notify the policy control rules server 1a of a new identifier of the RAN.

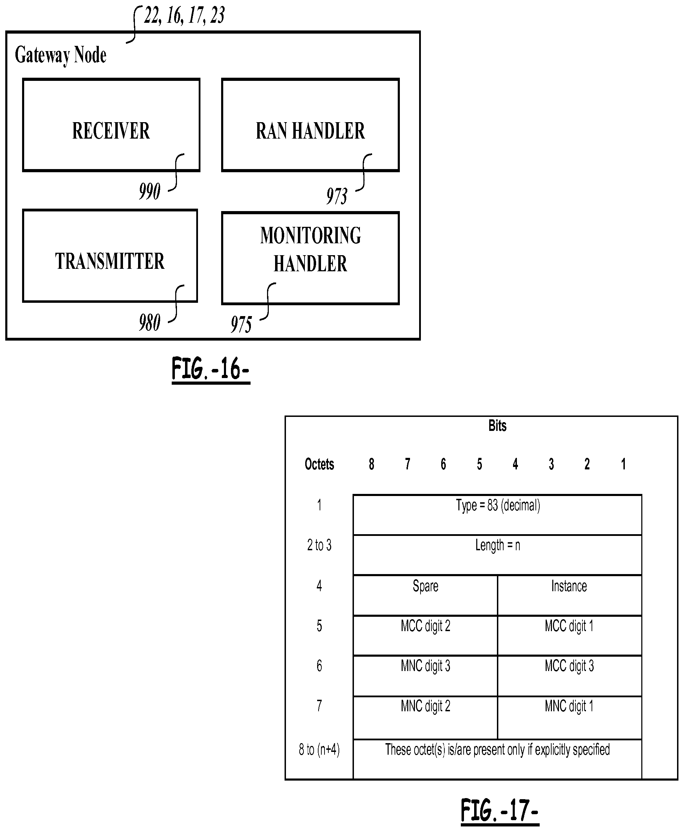

In this method, an exemplary identifier of the serving core network may be a serving-PLMN-ID and an exemplary identifier of the RAN may be a RAN-PLMN-ID. In particular, the serving-PLMN-ID may follow the scheme illustrated in Fig. 17 and the RAN-PLMN-ID may follow such scheme as well.

In this method, the policy control rules server 1a may be a PCRF server 1 of the PCC architecture illustrated in Fig. 1, whereas the network node 60 may be any one of the MME 13, SGSN 14, S4-SGSN 14, SGW 16, PGW 17 and GGSN 23 entities illustrated in Fig. 3 and/or Fig. 4. In this respect, depending on which of these entities is the network node, the network device 2a may reside in said network node, or in another entity.

Participating in this method, there is provided a system for notifying a policy control rules server, which handles policies related to a radio access network, RAN, of a shared RAN 45 used to connect a UE 12 with a serving core network.

This system comprises the network node 60 configured to receive a request for establishment or modification of a network connection between a UE 12 and the serving core network through a shared RAN 45 and transmit, towards a policy control rules server 1a handling policies related to the shared RAN, an identifier of the serving core network, an identifier of the RAN and, optionally, an indicator indicating a RAN sharing.

This system also comprises a policy control rules server 1a configured to receive, from the network node 60 of the serving core network, the identifier of the serving core network, the identifier of the RAN and, optionally, the indicator indicating the RAN sharing, determine that policies related to the identifier of the RAN exist and transmit, towards a network device 2a handling subscriptions to events, an event trigger subscribing to notifications of a RAN change.

This system also comprises a network device 2a configured to receive, from the policy control rules server 1a, the event trigger subscribing to notifications of a RAN change and monitor whether the identifier of the RAN changes in order to notify the policy control rules server 1a of a new identifier of the RAN.

As for the above method, the policy control rules server 1a may be a PCRF server 1 of the PCC architecture illustrated in Fig. 1, whereas the network node 60 may be any one of the MME 13, SGSN or S4-SGSN 14, SGW 16, PGW 17 and GGSN 23 entities illustrated in Fig. 3 and/or Fig. 4. In this respect, depending on which of these entities is the network node, the network device 2a may reside in said network node, or in another entity.

As for the above method, an exemplary identifier of the serving core network may be a serving-PLMN-ID and an exemplary identifier of the RAN may be a RAN-PLMN-ID. In particular, the serving-PLMN-ID may follow the scheme illustrated in Fig. 17 and the RAN-PLMN-ID may follow such scheme as well.

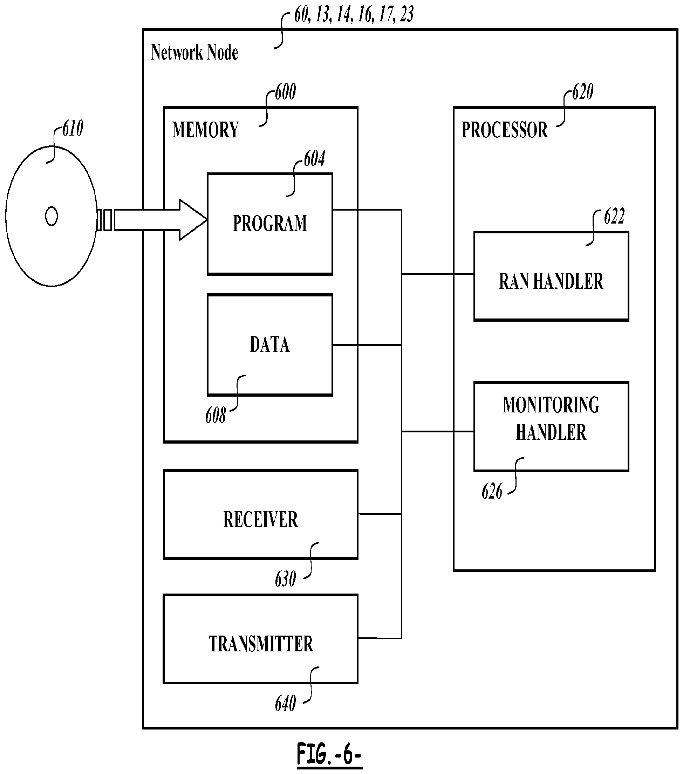

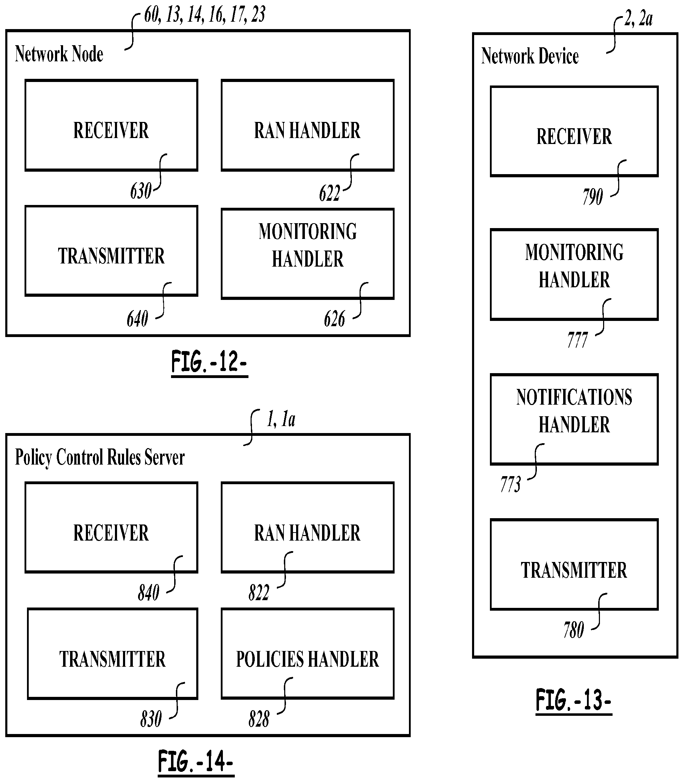

The network node 60, the network device 2a and the policy control rules server 1a of this system are respectively illustrated in Fig. 6, Fig. 7 and Fig. 8, in accordance with an embodiment; and in Fig. 12, Fig. 13 and Fig. 14, in accordance with another embodiment.

In accordance with an embodiment, the network node 60 may comprise, as shown in Fig. 6, at least one processor 620, and at least one memory 600 that stores processor-executable instructions 604. In this network node, the at least one processor interfaces with the at least one memory to execute the processor-executable instructions, whereby the network node is operable to perform the actions disclosed in the following.

The network node 60 is thus operable to receive a request for establishment or modification of a network connection between a UE 12 and a serving core network through a shared RAN 45 and transmit, towards a policy control rules server 1a, an identifier of the serving core network, an identifier of the RAN and, optionally, an indicator indicating a RAN sharing.

In particular, a RAN handler 622 running in a processor 620 may handle the request received via receiver 630 for establishment or modification of the network connection between the UE 12 and the serving core network through the shared RAN 45, and may handle the transmission, via transmitter 640 towards a policy control rules server 1a, of the identifier of the serving core network, the identifier of the RAN and, optionally, the indicator indicating the RAN sharing.

In particular, where the network device 2a resides in the network node 60, a monitoring handler 626 running in a processor 620 may handle the event trigger received from the policy control rules server 1a via receiver 630 and monitor whether the identifier of the RAN changes in order to notify the policy control rules server via the transmitter 640 of a new identifier of the RAN.

If required at all, the network node may be complemented with a data section 608 in memory to store any one of the indicator indicating the RAN sharing, the identifier of the serving core network and any identifier of the RAN.

The network node 60 illustrated in Fig. 6 may thus comprise the at least one processor 620 and the at least one memory 600, both in communication with each other, with the RAN handler 622, the monitoring handler 626, the receiver 630 and the transmitter 640, and with other elements or units of the network node 60. The at least one memory 600 may comprise volatile and/or non-volatile memory. In particular, the at least one memory 600 may have a computer program 604 and data 608 stored therein. The computer program 604 may be loaded in the at least one memory 600 from a computer program product 610, such as any non-transitory computer readable medium, in which the computer program is stored. The data 608 may comprise any one of the identifier of the serving core network, any identifier of the RAN and, optionally, the indicator indicating the RAN sharing. The at least one processor 620 may be configured to carry out the functions of the RAN handler 622 and the monitoring handler 626.

In accordance with another embodiment, the network node 60 may comprise, as shown in Fig. 12, a RAN handler module 622 configured to receive via a receiver 630 the request for establishment or modification of the network connection between the UE 12 and the serving core network through the shared RAN 45, and configured to transmit, via a transmitter 640 and towards the policy control rules server 1a, the identifier of the serving core network, the identifier of the RAN and, optionally, the indicator indicating the RAN sharing.

Where the network device 2a resides in the network node 60, the network node 60 may also comprise, as shown in Fig. 12, a monitoring handler module 626 configured to receive via the receiver 630 the event trigger from the policy control rules server 1a and monitor whether the identifier of the RAN changes in order to notify the policy control rules server 1a via the transmitter 640 of a new identifier of the RAN.

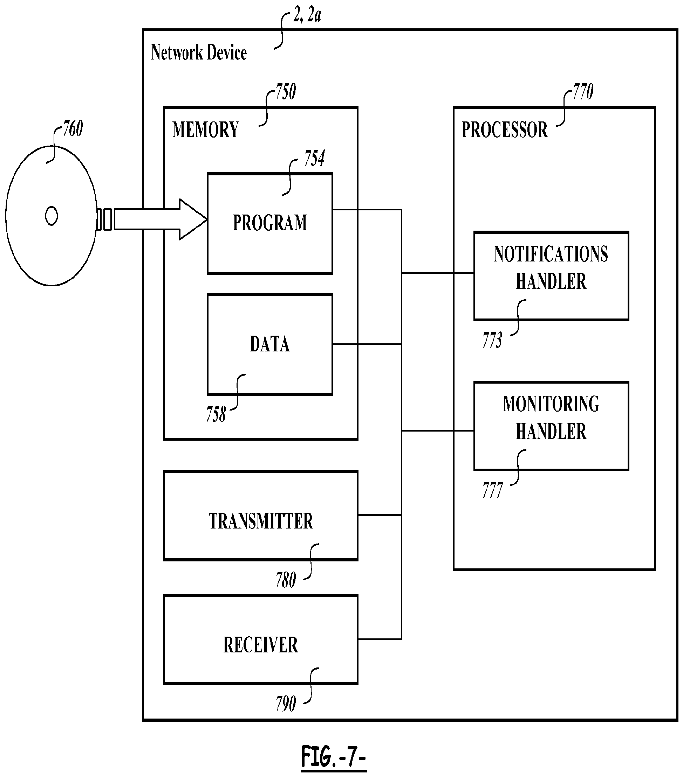

In accordance with an embodiment, the network device 2a may comprise, as shown in Fig. 7, at least one processor 770, and at least one memory 750 that stores processor-executable instructions 754. In this network device, the at least one processor interfaces with the at least one memory to execute the processor-executable instructions, whereby the network device is operable to perform the actions disclosed in the following.

The network device 2a is thus operable to receive, from the policy control rules server 1a, the event trigger subscribing to notifications of a RAN change and monitor whether the identifier of the RAN changes in order to notify the policy control rules server of a new identifier of the RAN.

In particular, a monitoring handler 777 running in a processor 770 may handle the event trigger received at receiver 790 and may monitor whether the identifier of the RAN changes; and a notifications handler 773 running in a processor 770 may notify the policy control rules server, via transmitter 780, of a new identifier of the RAN when there is a change of RAN.

The network device 2a may be complemented with a data section 758 in memory to store the event-trigger and any identifier of the RAN.

The network device 2a illustrated in Fig. 7 may thus comprise the at least one processor 770 and the at least one memory 750, both in communication with each other, with the notifications handler 773, the monitoring handler 777, the receiver 790 and the transmitter 780, and with other elements or units of the network device 2a. The at least one memory 750 may comprise volatile and/or non-volatile memory. In particular, the at least one memory 750 may have a computer program 754 and data 758 stored therein. The computer program 754 may be loaded in the at least one memory 750 from a computer program product 760, such as any non-transitory computer readable medium, in which the computer program is stored. The data 758 may comprise the event-trigger and any identifier of the RAN. The at least one processor 770 may be configured to carry out the functions of the monitoring handler 777 and the notifications handler 773.

In the case where the network device 2a resides in the network node 60 illustrated in Fig. 6, the functionality carried out by the at least one processor 770, the at least one memory 750, the receiver 790 and the transmitter 780 of the network device 2a may be carried out by the at least one processor 620, the at least one memory 600, the receiver 630 and the transmitter 640 of the network node 60. Likewise, the functionality carried out by the monitoring handler 777 and the notifications handler 773 running in the processor 770 of the network device 2a may be carried out by the monitoring handler 626 running in the processor 620 of the network node 60.

In accordance with another embodiment, the network device 2a may comprise, as shown in Fig. 13, a monitoring handler module 777 configured to handle the event trigger received via receiver 790 and monitor whether the identifier of the RAN changes, and a notifications handler module 773 configured to notify the policy control rules server 1a, via transmitter 780, of a new identifier of the RAN when there is a change of RAN.

In the case where the network device 2a resides in the network node 60 illustrated in Fig. 12, the functionality carried out by the receiver 790 and the transmitter 780 of the network device 2a may be carried out by the receiver 630 and the transmitter 640 of the network node 60. Likewise, the functionality carried out by the monitoring handler module 777 and the notifications handler module 773 of the network device 2a may be carried out by the monitoring handler module 626 of the network node 60. Alternatively, the functionality carried out by the monitoring handler module 777 may be carried out by the monitoring handler module 626 and the functionality carried out by the notifications handler module 773 may be carried out by a corresponding notifications handler module, not illustrated, included in the network node 60.

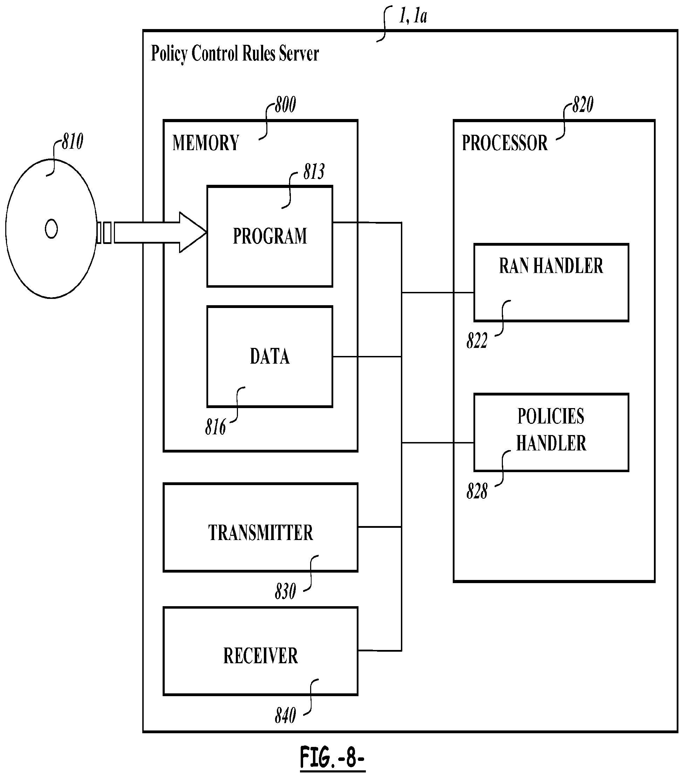

In accordance with an embodiment, the policy control rules server 1a may comprise, as shown in Fig. 8, at least one processor 820, and at least one memory 800 that stores processor-executable instructions 813. In this policy control rules server 1a, the at least one processor interfaces with the at least one memory to execute the processor-executable instructions, whereby the policy control rules server is operable to perform the actions disclosed in the following.

This policy control rules server 1a is thus operable to receive, from the network node 60 of the serving core network, the identifier of the serving core network, the identifier of the RAN and, optionally, the indicator indicating the RAN sharing, determine that one or more policies related to the identifier of the RAN exist and transmit, towards the network device 2a handling subscriptions to events, an event trigger subscribing to notifications of a RAN change.

In particular, a RAN handler 822 running in a processor 820 may handle the identifier of the serving core network, the identifier of the RAN and, optionally, the indicator indicating the RAN sharing received via receiver 840; and a policies handler 828 running in a processor 820 may determine that policies related to the identifier of the RAN exist and may transmit, towards the network device 2a via transmitter 830, the event trigger subscribing to notifications of a RAN change.

The policy control rules server 1a may be complemented with a data section 816 in memory to store the indicator indicating the RAN sharing, the identifier of the serving core network and any identifier of the RAN.

The policy control rules server 1a illustrated in Fig. 8 may thus comprise the at least one processor 820 and the at least one memory 800, both in communication with each other, with the RAN handler 822, the policies handler 828, the receiver 840 and the transmitter 830, and with other elements or units of the policy control rules server 1a. The at least one memory 800 may comprise volatile and/or non-volatile memory. In particular, the at least one memory 800 may have a computer program 813 and data 816 stored therein. The computer program 813 may be loaded in the at least one memory 800 from a computer program product 810, such as any non-transitory computer readable medium, in which the computer program is stored. The data 816 may comprise the identifier of the serving core network, any identifier of the RAN and, optionally, the indicator indicating the RAN sharing. The at least one processor 820 may be configured to carry out the functions of the RAN handler 822 and the policies handler 828.

In accordance with another embodiment, the policy control rules server 1a may comprise, as shown in Fig. 14, a RAN handler module 822 configured to receive, via receiver 840, the identifier of the serving core network, the identifier of the RAN and, optionally, the indicator indicating the RAN sharing; and a policies handler module 828 configured to determine that policies related to the identifier of the RAN exist and transmit, towards the network device 2a via transmitter 830, the event trigger subscribing to notifications of a RAN change.

Back to the method discussed above with reference to Fig. 15, the method may further comprise a step of determining at the network node 60 that the RAN is a shared network, prior to transmitting the identifier of the serving core network, the identifier of the RAN and, optionally, the indicator indicating the RAN sharing.

In an embodiment of the invention and when the network node 60 is any one of the MME 13, the SGSN 14 and the S4-SGSN 14, the identifier of the serving core network, the identifier of the RAN and, optionally, the indicator indicating the RAN sharing may be directly transmitted, from the network node 60 towards the policy control rules server 1a, via the direct interface Sx illustrated in Fig. 4. Also when the network node 60 is any one of the PGW 17 and GGSN 23, the identifier of the serving core network, the identifier of the RAN and, optionally, the indicator indicating the RAN sharing may be directly transmitted, from the network node 60 towards the policy control rules server 1a, via the direct interface Gx illustrated in Fig. 4.

In another embodiment, the identifier of the serving core network, the identifier of the RAN and, optionally, the indicator indicating the RAN sharing may be transmitted, from the network node 60 towards the policy control rules server 1a, through one or more gateway nodes, such as the Gateway 22 illustrated in Fig. 1.

In particular, the one or more gateways may comprise any one of the SGW 16, the PGW 17 and the GGSN 23. Still in this case and also in particular, the network device 2a may reside in the network node 60, i.e. the MME 13, the SGSN 14 and the S4-SGSN 14, or may reside in any one of the PGW 17 and the GGSN 23.

In this case, where the network device 2a resides in one of the PGW 17 and the GGSN 23, the method may further comprise a step of transmitting, from the network device 2a towards the network node 60, an indication requesting to be notified of a RAN change.

Moreover, where the network device 2a resides in one of the PGW 17 and the GGSN 23, the network device 2a may implement a PCEF 2 of the PCC architecture illustrated in Fig. 1.

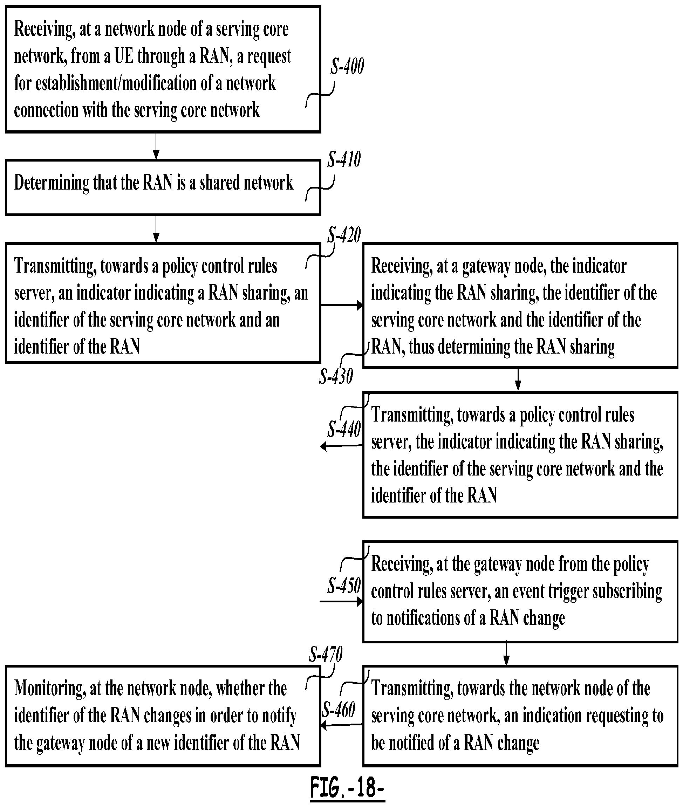

At least some of these particular embodiments, discussed for the general method explained with reference to Fig. 15, are further discussed with reference to the exemplary embodiment of the method illustrated in Fig. 18.

In this embodiment illustrated in Fig. 18, at a network node 60 of the serving core network, i.e. the MME 13, the SGSN 14 or the S4-SGSN 14, there is a step S-400 of receiving a request for establishment or modification of a network connection, between the UE and the serving core network, through a shared RAN; there is a step S-410 of determining that the RAN is a shared network; and there is a step S-420 of transmitting, from the network node 60 towards the policy control rules server 1a via one or more gateways (such as gateway 22 in Fig. 1), an identifier of the serving core network, an identifier of the RAN and, optionally, an indicator indicating a RAN sharing.

The method at the one or more gateways, e.g. SGW 16 and PGW 17, or GGSN 23, comprises a step S-430 of receiving the identifier of the serving core network, the identifier of the RAN (thus determining at the gateway that the RAN is shared) and, optionally, the indicator indicating the RAN sharing, and a step of transmitting the identifier of the serving core network, the identifier of the RAN and, optionally, the indicator indicating the RAN sharing towards the policy control rules server 1a. The policy control rules server 1a may carry out steps S-330 to S-350 as in the general method illustrated in Fig. 15. And, where the gateway is any one of the PGW 17 and the GGSN 23, the method comprises a step S-450 of receiving, at the gateway node 17 or 23 from the policy control rules server 1a, an event trigger subscribing to notifications of a RAN change, and a step S-460 of transmitting, from the gateway node 17 or 23 towards the network node 13 or 14, an indication requesting to be notified of a RAN change.

Upon receipt of the indicator requesting to be notified of a RAN change, the method includes at the network node 13 or 14 a step S-470 of monitoring whether the identifier of the RAN changes in order to notify the gateway node 17 or 23 of a new identifier of the RAN.

In order to carry out these further embodiments of the method discussed above with reference to Fig. 15 and Fig. 18, corresponding embodiments for the system, the network node 60, the policy control rules server 1a, the network device 2a and, where applicable, the gateway 22 are discussed in the following.

In the embodiment illustrated in Fig. 6, the network node 60 of the serving core network may be operable to determine that the RAN is a shared network, prior to transmitting the identifier of the serving core network, the identifier of the RAN and, optionally, the indicator indicating the RAN sharing.

In particular, the RAN handler 622 running in the processor 620 may determine that the RAN is a shared network, prior to transmitting the identifier of the serving core network, the identifier of the RAN and, optionally, the indicator indicating the RAN sharing.

In another embodiment illustrated in Fig. 12, the RAN handler module 622 may be configured to determine that the RAN is a shared network, prior to transmitting the identifier of the serving core network, the identifier of the RAN and, optionally, the indicator indicating the RAN sharing.

In an embodiment, the network node 60 of the serving core network shown in Fig. 6 may be operable to directly transmit, via the direct interface Sx illustrated in Fig. 4, the identifier of the serving core network, the identifier of the RAN and, optionally, the indicator indicating the RAN sharing to the policy control rules server 1a. In particular, the RAN handler 622 running in the processor 620 and illustrated in Fig. 6 may handle the direct transmission, via transmitter 640, of the identifier of the serving core network and the identifier of the RAN and, optionally, the indicator indicating the RAN sharing to the policy control rules server 1a.

In the embodiment of the network node 60 illustrated in Fig. 12, the RAN handler module 622 may be configured to directly transmit over the Sx interface, via a transmitter 640 and to the policy control rules server 1a, the identifier of the serving core network, the identifier of the RAN and, optionally, the indicator indicating the RAN sharing.

In another embodiment, the identifier of the serving core network, the identifier of the RAN and, optionally, the indicator indicating the RAN sharing may be transmitted, from the network node 60 towards the policy control rules server 1a, through one or more gateway nodes, such as the Gateway 22 illustrated in Fig. 1.

Where this is the case, and where the network device 2a resides in the gateway node 22, the network node 60 of the serving core network, in the embodiment shown in Fig. 6, may be operable to receive, from the gateway node 22, an indication requesting to be notified of a RAN change, and monitor whether the identifier of the RAN changes in order to notify the gateway node of a new identifier of the RAN.

In particular, the monitoring handler 626 running in the processor 620 and illustrated in Fig. 6 may handle the indication, received via receiver 630, requesting to be notified of a RAN change, monitor when the identifier of the RAN changes and, when there is a change, notify the gateway node via transmitter 640 of a new identifier of the RAN.

Still in this case, the system may further comprise one or more gateway nodes, e.g. gateway 22, interposed between the network node 60 and the policy control rules server 1a. Exemplary gateways maybe e.g. SGW and PGW, or GGSN.

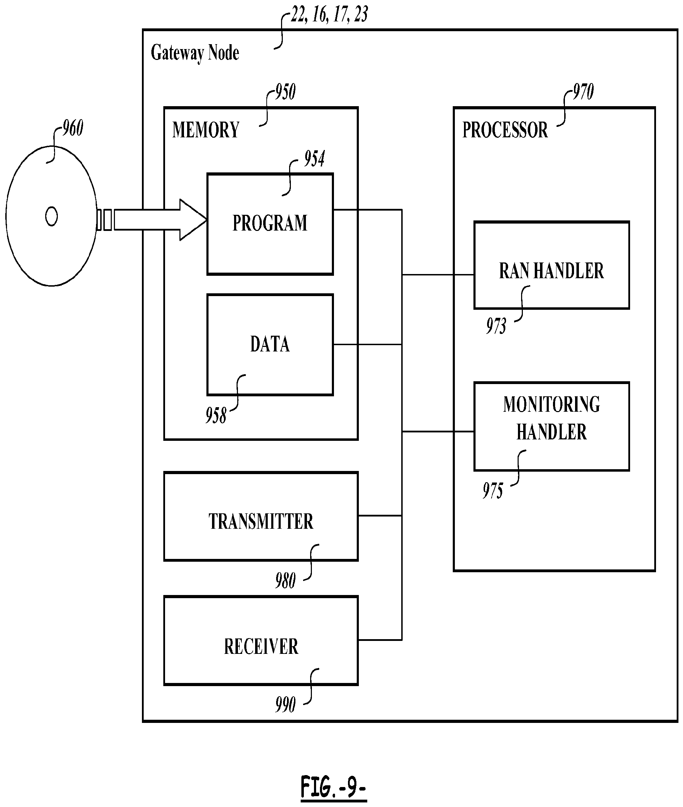

In accordance with an embodiment, the gateway node 22 may comprise, as shown in Fig. 9, at least one processor 970, and at least one memory 950 that stores processor-executable instructions 954. In this gateway node, the at least one processor interfaces with the at least one memory to execute the processor-executable instructions, whereby the gateway node is operable to perform the actions disclosed in the following.

The gateway node 22 is thus operable to receive, from a network node 60 or from another gateway, a request for establishment or modification of a network connection between a UE 12 and a serving core network through a shared RAN 45. This request comprises the identifier of the serving core network, the identifier of the RAN and, optionally, the indicator indicating the RAN sharing, which were submitted from the network node 60 in its way to the policy control rules server 1a.

As receiving such information, the gateway node 22 is thus operable to determine that the RAN is a shared network, prior to transmitting the identifier of the serving core network, the identifier of the RAN and, optionally, the indicator indicating the RAN sharing.

The gateway node 22 is also operable to transmit, towards a policy control rules server 1a, the identifier of the serving core network, the identifier of the RAN and, optionally, the indicator indicating the RAN sharing.

In particular, a RAN handler 973 running in a processor 970 may handle the request received via receiver 990 for establishment or modification of the network connection between the UE 12 and the serving core network through the shared RAN 45, may determine that the RAN is a shared network and may handle the transmission, via transmitter 980 towards a policy control rules server 1a, of the identifier of the serving core network, the identifier of the RAN and, optionally, the indicator indicating the RAN sharing.

In particular, where the network device 2a resides in the gateway node 22, a monitoring handler 975 running in a processor 970 may handle the event trigger received from the policy control rules server 1a via receiver 990 and monitor whether the identifier of the RAN changes in order to notify the policy control rules server via the transmitter 980 of a new identifier of the RAN.

In an embodiment, in order to monitor whether the identifier of the RAN changes, this monitoring handler 975 may submit, via transmitter 980 to the network node 60, an indication requesting to be notified of a RAN change; may receive, from the network node 60 via receiver 990, a notification of a new identifier of the RAN; and may transmit, towards the policy control rules server 1a via transmitter 980, the notification of the new identifier of the RAN.

If required at all, the gateway node may be complemented with a data section 958 in memory to store any one of the identifier of the serving core network, any identifier of the RAN and, optionally, the indicator indicating the RAN sharing.

The gateway node 22 illustrated in Fig. 9 may thus comprise the at least one processor 970 and the at least one memory 950, both in communication with each other, with the RAN handler 973, the monitoring handler 975, the receiver 990 and the transmitter 980, and with other elements or units of the gateway node 22. The at least one memory 950 may comprise volatile and/or non-volatile memory. In particular, the at least one memory 950 may have a computer program 954 and data 958 stored therein. The computer program 954 may be loaded in the at least one memory 950 from a computer program product 960, such as any non-transitory computer readable medium, in which the computer program is stored. The data 958 may comprise any one of the identifier of the serving core network, any identifier of the RAN and, optionally, the indicator indicating the RAN sharing. The at least one processor 970 may be configured to carry out the functions of the RAN handler 973 and the monitoring handler 975.

In accordance with another embodiment, the gateway node 22 may comprise, as shown in Fig. 16, a RAN handler module 973 configured to receive via a receiver 990 the request for establishment or modification of the network connection between the UE 12 and the serving core network through the shared RAN 45, the request including the identifier of the serving core network, the identifier of the RAN and, optionally, the indicator indicating the RAN sharing. The RAN handler module 973 thus configured to determine that the RAN is a shared network, and configured to transmit, via a transmitter 980 towards the policy control rules server 1a, the identifier of the serving core network, the identifier of the RAN and, optionally, the indicator indicating the RAN sharing.

In particular, where the network device 2a resides in the gateway node 22 illustrated in Fig. 16, a monitoring handler module 975 maybe configured to receive via the receiver 990 the event trigger from the policy control rules server 1a, and monitor whether the identifier of the RAN changes in order to notify the policy control rules server 1a via the transmitter 980 of a new identifier of the RAN.

In an embodiment, in order to monitor whether the identifier of the RAN changes, this monitoring handler module 975 may be configured to submit, via transmitter 980 to the network node 60, an indication requesting to be notified of a RAN change; receive, from the network node 60 via receiver 990, a notification of a new identifier of the RAN; and transmit, towards the policy control rules server 1a via transmitter 980, the notification of the new identifier of the RAN.

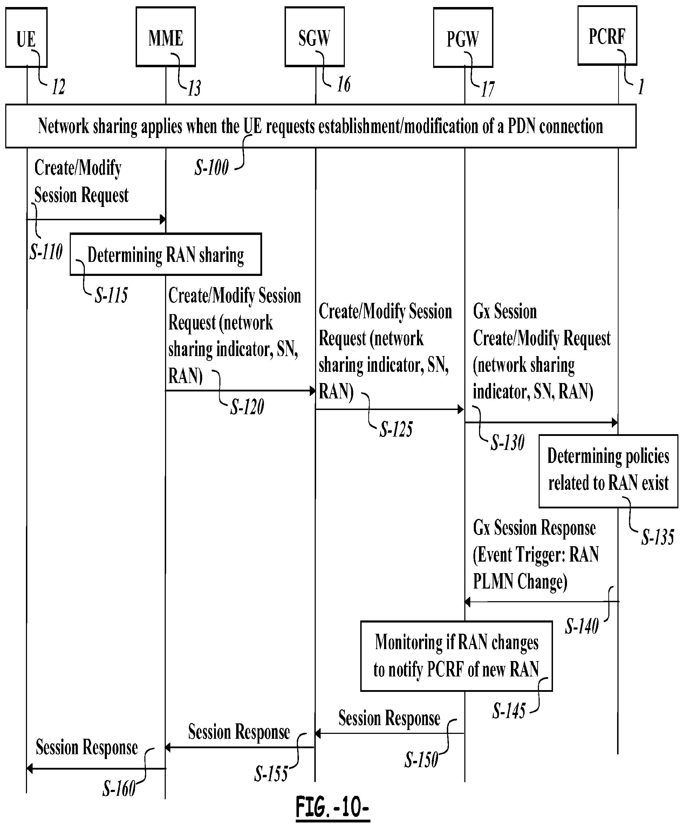

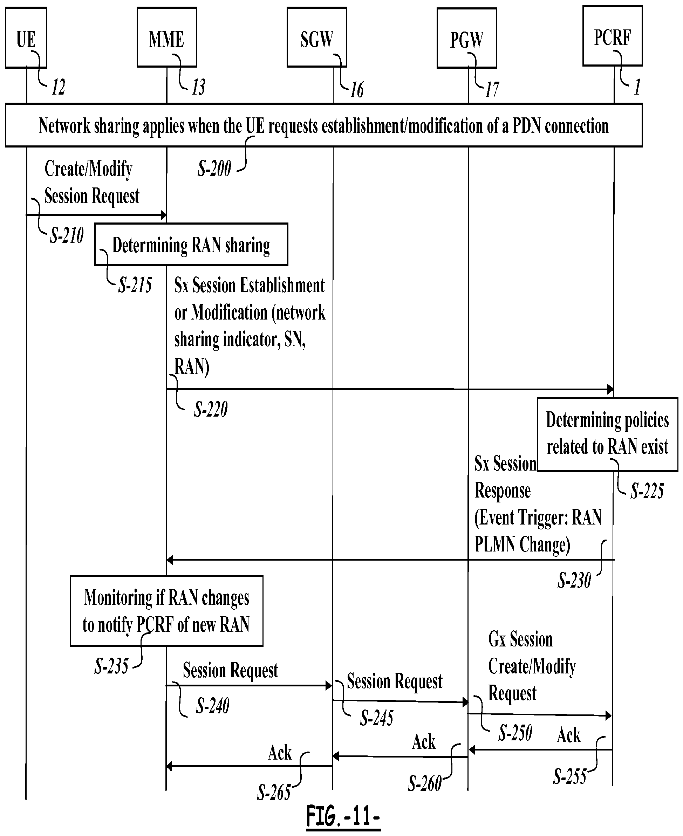

Some exemplary network procedures with at least some of the above embodiments are discussed in the following with reference to Fig. 10 and Fig. 11.

Fig. 10 exemplary illustrates how the solution works in an EPS deployment with E-UTRAN as RAN and having GTP between the MME 13 and the PGW 17. The MME is just an example and it could be any one of S4-SGSN, MME or Gn/Gp SGSN. Likewise, a GGSN 23 may follow a similar approach as for the PGW 17. The UE may camp on any one of 2G, 3G or LTE.

Step S-100 in Fig. 10 represents a sort of pre-condition: a network sharing applies when the UE requests establishment or modification of a PDN connection. The fact is that, unless otherwise specified, a similar procedure applies for establishment of a new connection as for modification of an existing connection.

During step S-110 the UE initiates a PDN connection establishment or modification, by submitting e.g. a create session request or a modify bearer request to the MME 13 through a shared RAN, as per current procedures. In particular, the PDN modification may occur when a UE with an active PDN connection moves to a different RAN. The MME is a network node of a serving core network selected by the UE or assigned by the network.

For the sake of simplicity, the create session request and modify bearer request are indistinctly referred to in Fig. 10 as create/modify session request.

During step S-115, the MME determines there is a RAN sharing and, during step S-120, transmits to a SGW 16 the create/modify session request including a network sharing indicator that indicates a RAN sharing, an identifier of the serving core network (abbreviated as SN) and an identifier of the RAN (abbreviated as RAN). The identifier of the serving core network, e.g. serving-PLMN-ID, identifies the PLMN where the MME is located. The identifier of the RAN, e.g. RAN-PLMN-ID, may be derived from location information provided by the RAN, or by a so-called Global eNB ID received during the Setup procedure over the S1 interface, or even by configuration.

The SGW 16 receives the create/modify session request with the network sharing indicator, the identifier of the serving core network and the identifier of the RAN and, aware of the RAN sharing, transmits to a PGW 17, during step S-125, the create/modify session request with the network sharing indicator, the identifier of the serving core network and the identifier of the RAN.

The PGW 17 receives the create/modify session request with the network sharing indicator, the identifier of the serving core network and the identifier of the RAN and, aware of the RAN sharing, transmits to a PCRF server 1, during step S-130, a Gx session establishment or modification request, i.e. Gx Session Create/Modify Request, including the network sharing indicator, the identifier of the serving core network and the identifier of the RAN.

The PCRF server 1 receives the network sharing indicator, the identifier of the serving core network and the identifier of the RAN, determines during step S-135 that one or more policies related to the identifier of the RAN exist and, in order to subscribe to notifications of a RAN change, transmits during step S-140 a Gx session response with a specific event trigger, e.g. RAN_PLMN_Change, for this purpose to a network device located in the PGW 17. In addition, and not illustrated in any drawing, the PCRF server 1 may submit PCC rules towards the PGW as well.

In particular, when the PCRF server 1 receives a Gx session modification, the PCRF server may determine between steps S-135 and S-140 that the event trigger had already been submitted during the correspondingly previous Gx session establishment and may skip submitting the same event trigger again.

The network device, which is in charge of handling subscriptions to events at the PGW 17, starts monitoring, during step S-145, if the RAN changes in order to notify the PCRF server of a new RAN identifier.

The PGW 17 transmits a corresponding session response to the SGW 16 during step S-150, the SGW transmits a corresponding session response to the MME 13 during step S-155, and the MME 13 transmits a corresponding session response to the UE 12, during step S-160, via the RAN network.

A similar procedure can be followed when the Sx interface shown in Fig. 4 is used between an MME/SGSN and the PCRF server 1.

Step S-200 in Fig. 11 represents a sort of pre-condition: a network sharing applies when the UE requests establishment or modification of a PDN connection. Unless otherwise specified, a similar procedure applies for establishment of a new connection as for modification of an existing connection.

During step S-210 the UE initiates a PDN connection establishment or modification, by submitting e.g. a create session request or a modify bearer request to the MME 13 through a shared RAN, as per current procedures. In particular, the PDN modification may occur when a UE with an active PDN connection moves to a different RAN. The MME is a network node of a serving core network selected by the UE or assigned by the network.

For the sake of simplicity, the create session request and modify bearer request are indistinctly referred to in Fig. 11 as create/modify session request or, simply, as session request.

During step S-215, the MME determines there is a RAN sharing and, during step S-220, transmits to a PCRF server 1 an Sx session establishment or modification request including a network sharing indicator that indicates a RAN sharing, an identifier of the serving core network (abbreviated as SN) and an identifier of the RAN (abbreviated as RAN). As for the procedure illustrated in Fig. 10, also in this procedure illustrated in Fig. 11, the identifier of the serving core network, e.g. serving-PLMN-ID, identifies the PLMN where the MME is located. The identifier of the RAN, e.g. RAN-PLMN-ID, may be derived from location information provided by the RAN, or by a so-called Global eNB ID received during the Setup procedure over the S1 interface, or even by configuration.

The PCRF server 1 receives the network sharing indicator, the identifier of the serving core network and the identifier of the RAN, determines during step S-225 that one or more policies related to the identifier of the RAN exist and, in order to subscribe to notifications of a RAN change, transmits during step S-230 an Sx session response (for the session establishment or for the session modification, as the case may be) with a specific event trigger, e.g. RAN_PLMN_Change, for this purpose to a network device located in the MME 13.

In particular, when the PCRF server 1 receives an Sx session modification, the PCRF server may determine between steps S-225 and S-230 that the event trigger had already been submitted during the correspondingly previous Sx session establishment and may skip submitting the same event trigger again.

The network device, which is in charge of handling subscriptions to events at the MME 13, starts monitoring, during step S-235, if the RAN changes in order to notify the PCRF server of a new RAN identifier.

Then, the MME 13 transmits to a SGW 16, during step S-240, the session request, i.e. the create session request or modify bearer request received from the UE, in accordance with existing procedures. The SGW 16 transmits to a PGW 17, during step S-245, the session request, i.e. the create session request or modify bearer request received from the MME, in accordance with existing procedures.

The PGW 17 transmits to a PCRF server 1, during step S-250, a Gx session establishment or modification request. For the sake of simplicity, illustrated as Gx Session Create/Modify Request, in accordance with existing procedures.

The PCRF server may behave in accordance with existing procedures and transmit during step S-255 a Gx session response, 'ack' for the sake of simplicity, to the PGW 17. In addition, and not illustrated in any drawing, the PCRF server 1 may submit PCC rules towards the PGW as well.

The PGW 17 transmits a corresponding session response, 'ack', to the SGW 16 during step S-260, the SGW transmits a corresponding session response, 'ack', to the MME 13 during step S-265, and the MME 13 transmits a corresponding session response, not illustrated in any drawing, to the UE 12 via the RAN network.

The invention may also be practised by one or more computer programs, loadable into an internal memory of one or more computers with one or more processors. The one or more computer programs comprise instructions executable by the one or more processors to carry out the above methods. In particular, the computer programs may be recorded in carriers readable in a computer.

The invention is described above in connection with various embodiments that are intended to be illustrative and non-restrictive. It is expected that those of ordinary skill in this art may modify these embodiments. The scope of the invention is defined by the claims in conjunction with the description and drawings, and all modifications that fall within the scope of the appended claims.

## Claims

1. A method for notifying a policy control rules server, which handles policies related to a radio access network, RAN, of a shared RAN (45) used to connect a user equipment (12), UE, with a serving core network, the method comprising:
receiving (S-110, S-120, S-125, S-300), at a network node (60) of a serving core network, a request for establishment or modification of a network connection between a UE (12) and the serving core network through a RAN;
determining (S-115, S-410, S-430), at the network node, that the RAN is a shared RAN (45);
transmitting (S-120, S-125, S-130, S-320), from the network node (60) towards a policy control rules server (1, 1a) handling policies related to the shared RAN, an indicator indicating a RAN sharing, an identifier of the serving core network and an identifier of the RAN;
determining (S-135, S-225, S-340) at the policy control rules server (1, 1a) that policies related to the identifier of the RAN exist;
transmitting (S-140, S-230, S-350), from the policy control rules server towards a network device (2, 2a) handling subscriptions to events, an event trigger subscribing to notifications of a RAN change; and
monitoring (S-145, S-235, S-370), at the network device, whether the identifier of the RAN changes in order to notify the policy control rules server of a new identifier of the RAN.

2. The method of claim 1, wherein the policy control rules server (1a) is a server implementing a Policy and Charging Rules Function, PCRF, (1).

3. The method of any one of claims 1 or 2, wherein the network node (60) is any one of a Mobility Management Entity (13), MME, a Serving GPRS Support Node supporting a so-called Gn/Gp interface, hereinafter SGSN (14), a Serving GPRS Support Node supporting a so-called S4 interface, hereinafter S4-SGSN (14), a Serving Network Gateway (16), SGW, a Packet Data Network Gateway (17), PGW, and a Gateway GPRS Support Node (23), GGSN.

4. The method of any one of claims 1 to 3, wherein the indicator indicating the RAN sharing, the identifier of the serving core network and the identifier of the RAN are transmitted from the network node (60, 13, 14, 16) towards the policy control rules server through one or more gateway nodes (16, 17, 23), wherein the one or more gateway nodes comprises any ones of a Serving Network Gateway (16), SGW, a Packet Data Network Gateway (17), PGW, and a Gateway GPRS Support Node (23), GGSN.

5. The method of claim 4, wherein the network device (2, 2a) resides in a gateway node (17, 23), and the method further comprises transmitting, from the network device towards the network node (60, 13, 14), an indication requesting to be notified of a RAN change.

6. The method of any one of claims 1 to 3, wherein the indicator indicating the RAN sharing, the identifier of the serving core network and the identifier of the RAN are directly transmitted from the network node (13, 14, 17, 23) towards the policy control rules server (1, 1a) via a direct interface (Sx, Gx).

7. A system for notifying a policy control rules server, which handles policies related to a radio access network, RAN, of a shared RAN (45) used to connect a user equipment (12), UE, with a serving core network, the system comprising:
a network node (60) of a serving core network configured to:
receive a request for establishment or modification of a network connection between a UE (12) and the serving core network through a RAN;
determine that the RAN is a shared RAN (45);
transmit, towards a policy control rules server (1, 1a) handling policies related to the shared RAN, an indicator indicating a RAN sharing, an identifier of the serving core network and an identifier of the RAN;
a policy control rules server (1, 1a) configured to:
receive, from the network node (60) of the serving core network, the indicator indicating the RAN sharing, the identifier of the serving core network and the identifier of the RAN;
determine that policies related to the identifier of the RAN exist;
transmit, towards a network device (2, 2a) handling subscriptions to events, an event trigger subscribing to notifications of a RAN change; and
a network device (2, 2a) configured to:
receive, from the policy control rules server (1, 1a), the event trigger subscribing to notifications of a RAN change; and
monitor whether the identifier of the RAN changes in order to notify the policy control rules server of a new identifier of the RAN.

8. The system of claim 7, further comprising one or more gateway nodes (16, 17, 23) configured to receive, from the network node (60, 13, 14, 16), the indicator indicating the RAN sharing, the identifier of the serving core network and the identifier of the RAN and transmit, towards the policy control rules server (1, 1a), the indicator indicating the RAN sharing, the identifier of the serving core network and the identifier of the RAN, wherein the one or more gateway nodes comprises any ones of a Serving Network Gateway (16), SGW, a Packet Data Network Gateway (17), PGW, and a Gateway GPRS Support Node (23), GGSN.

9. A network node (60, 13, 14, 16, 17, 23) of a serving core network for notifying a policy control rules server (1, 1a), which handles policies related to a radio access network, RAN, of a shared RAN (45) used to connect a user equipment (12), UE, with the serving core network, the network node comprising a processor (620) and a memory (600), said memory containing instructions (604) executable by said processor (622, 626), whereby said network node is operative to:
receive a request for establishment or modification of a network connection between a UE (12) and a serving core network through a RAN;
determine that the RAN is a shared RAN (45); and
transmit, towards a policy control rules server (1, 1a), an indicator indicating a RAN sharing, an identifier of the serving core network and an identifier of the RAN.

10. The network node of claim 9, further operative to:
receive, from the policy control rules server (1, 1a), an event trigger subscribing to notifications of a RAN change; and
monitor whether the identifier of the RAN changes in order to notify the policy control rules server of a new identifier of the RAN.

11. The network node of any one of claims 9 or 10, wherein the network node is any one of a Mobility Management Entity (13), MME, a Serving GPRS Support Node supporting a so-called Gn/Gp interface, hereinafter SGSN (14), and a Serving GPRS Support Node supporting a so-called S4 interface, hereinafter S4-SGSN (14), a Serving Network Gateway (16), SGW, a Packet Data Network Gateway (17), PGW, and a Gateway GPRS Support Node (23), GGSN.

12. The network node (60, 13, 14, 16) of any one of claims 9 to 11, further operative to:
receive, from a gateway node (16, 17, 23), an indication requesting to be notified of a RAN change; and
monitor whether the identifier of the RAN changes in order to notify the gateway node of a new identifier of the RAN.

13. The network node (60, 13, 14, 16) of any one of claims 9 to 12, wherein the indicator indicating the RAN sharing, the identifier of the serving core network and the identifier of the RAN are directly transmitted from the network node (60, 13, 14, 17, 23) towards the policy control rules server (1, 1a) via a direct interface (Sx, Gx).

14. A policy control rules server (1, 1a) handling policies related to a radio access network (45), RAN, the RAN being used to connect a user equipment (12), UE, with a serving core network, the policy control rules server comprising a processor (820) and a memory (800), the memory containing instructions (813) executable by the processor (822, 828), whereby said policy control rules server is operative to:
receive, from a network node (60) of a serving core network, an indicator indicating a RAN sharing, an identifier of the serving core network and an identifier of the RAN;
determine that policies related to the identifier of the RAN exist; and
transmit, towards a network device (2, 2a) handling subscriptions to events, an event trigger subscribing to notifications of a RAN change.

15. The policy control rules server of claim 14, wherein the network device resides in at least one of the network node (60, 13, 14) of the serving core network and a gateway node (17, 23).

16. The policy control rules server of any one of claims 14 or 15, wherein the policy control rules server (1a) is a server implementing a Policy and Charging Rules Function, PCRF, (1).

## Patentansprüche

1. Verfahren zur Benachrichtigung eines Richtliniensteuerungsregelservers, der Richtlinien in Bezug auf ein Funkzugangsnetzwerk, RAN, handhabt, von einem freigegebenen RAN (45), das zum Verbinden einer Benutzereinrichtung, UE, (12) mit einem versorgenden Kernnetzwerk verwendet wird, wobei das Verfahren umfasst:
Empfangen (S-110, S-120, S-125, S-300) an einem Netzwerkknoten (60) eines versorgenden Kernnetzwerks einer Anforderung zur Herstellung oder Modifizierung einer Netzwerkverbindung zwischen einer UE (12) und dem versorgenden Kernnetzwerk durch ein RAN;
Bestimmen (S-115, S-410, S-430) am Netzwerkknoten, dass das RAN ein freigegebenes RAN (45) ist;
Senden (S-120, S-125, S-130, S-320) eines Indikators, der eine RAN-Freigabe, eine Kennung des versorgenden Kernnetzwerks und eine Kennung des RANs angibt, vom Netzwerkknoten (60) an einen Richtliniensteuerungsregelserver (1, 1a), der Richtlinien in Bezug auf das freigegebene RAN handhabt;
Bestimmen (S-135, S-225, S-340) am Richtliniensteuerungsregelserver (1, 1a), dass Richtlinien in Bezug auf die Kennung des RANs vorhanden sind;
Senden (S-140, S-230, S-350) eines Ereignisauslösers, der Benachrichtigungen eines RAN-Wechsels abonniert, vom Richtliniensteuerungsregelserver an eine Netzwerkvorrichtung (2, 2a), die Abonnements von Ereignissen handhabt; und
Überwachen (S-145, S-235, S-370) an der Netzwerkvorrichtung, ob die Kennung des RANs wechselt, um den Richtliniensteuerungsregelserver von einer neuen Kennung des RANs zu benachrichtigen.

2. Verfahren nach Anspruch 1, wobei der Richtliniensteuerungsregelserver (1a) ein Server ist, der eine Richtlinien- und Abrechnungsregelfunktion, PCRF, (1) implementiert.

3. Verfahren nach einem der Ansprüche 1 oder 2, wobei der Netzwerkknoten (60) eines von einer Mobilitätsverwaltungsinstanz, MME, (13), einem versorgenden GPRS-Unterstützungsknoten, der eine sogenannte Gn/Gp-Schnittstelle unterstützt, im Folgenden SGSN, (14), einem versorgenden GPRS-Unterstützungsknoten, der eine sogenannte S4-Schnittstelle unterstützt, im Folgenden S4-SGSN, (14), einem versorgenden Netzwerk-Gateway, SGW, (16), einem Paketdatennetzwerk-Gateway, PGW, (17) und einem Gateway-GPRS-Unterstützungsknoten, GGSN, (23) ist.

4. Verfahren nach einem der Ansprüche 1 bis 3, wobei der Indikator, der die RAN-Freigabe, die Kennung des versorgenden Kernnetzwerks und die Kennung des RANs angibt, vom Netzwerkknoten (60, 13, 14, 16) durch einen oder mehrere Gateway-Knoten (16, 17, 23) an den Richtliniensteuerungsregelserver gesendet wird, wobei der eine oder die mehreren Gateway-Knoten eines von einem versorgenden Netzwerk-Gateway, SGW, (16), einem Paketdatennetzwerk-Gateway, PGW, (17) und einem Gateway-GPRS-Unterstützungsknoten, GGSN, (23) umfassen.

5. Verfahren nach Anspruch 4, wobei die Netzvorrichtung (2, 2a) sich in einem Gateway-Knoten (17, 23) befindet, und das Verfahren ferner ein Senden einer Angabe mit der Anforderung, von einem RAN-Wechsel benachrichtigt zu werden, von der Netzwerkvorrichtung an den Netzwerkknoten (60, 13, 14) umfasst.

6. Verfahren nach einem der Ansprüche 1 bis 3, wobei der Indikator, der die RAN-Freigabe, die Kennung des versorgenden Kernnetzwerks und der Kennung des RANs angibt, über eine direkte Schnittstelle (Sx, Gx) direkt vom Netzwerkknoten (13, 14, 17, 23) an den Richtliniensteuerungsregelserver (1, 1a) gesendet wird.

7. System zum Benachrichtigen eines Richtliniensteuerungsregelservers, der Richtlinien in Bezug auf ein Funkzugangsnetzwerk, RAN, handhabt, von einem freigegebenen RAN (45), das zum Verbinden einer Benutzereinrichtung, UE, (12) mit einem versorgenden Kernnetzwerk verwendet wird, wobei das System umfasst:
einen Netzwerkknoten (60) eines versorgenden Kernnetzwerks, der konfiguriert zum:
Empfangen einer Anforderung zur Herstellung oder Modifizierung einer Netzwerkverbindung zwischen einer UE (12) und dem versorgenden Kernnetzwerk durch ein RAN;
Bestimmen, dass das RAN ein freigegebenes RAN (45) ist;
Senden eines Indikators, der eine RAN-Freigabe, eine Kennung des versorgenden Kernnetzwerks und eine Kennung des RANs angibt, an einen Richtliniensteuerungsregelserver (1, 1a), der Richtlinien in Bezug auf das freigegebene RAN handhabt;
einen Richtliniensteuerungsregelserver (1, 1a), der konfiguriert ist zum:
Empfangen des Indikators, der die RAN-Freigabe, die Kennung des versorgenden Kernnetzwerks und die Kennung des RANs angibt, vom Netzwerkknoten (60) des versorgenden Kernnetzwerks;
Bestimmen, dass Richtlinien in Bezug auf die Kennung des RANs vorhanden sind;
Senden eines Ereignisauslösers, der Benachrichtigungen eines RAN-Wechsels abonniert, an eine Netzwerkvorrichtung (2, 2a), die Abonnements von Ereignissen handhabt; und
eine Netzwerkvorrichtung (2, 2a), die konfiguriert ist zum:
Empfangen des Ereignisauslösers, der Benachrichtigungen eines RAN-Wechsels abonniert, vom Richtliniensteuerungsregelserver (1, 1a); und
Überwachen, ob die Kennung des RANs wechselt, um den Richtliniensteuerungsregelserver von einer neuen Kennung des RANs zu benachrichtigen.

8. System nach Anspruch 7, ferner umfassend einen oder mehrere Gateway-Knoten (16, 17, 23), die so konfiguriert sind, dass sie den Indikator, der die RAN-Freigabe, die Kennung des versorgenden Kernnetzwerks und die Kennung des RANs angibt, vom Netzwerkknoten (60, 13, 14, 16) empfangen und den Indikator, der die RAN-Freigabe, die Kennung des versorgenden Kernnetzwerks und die Kennung des RANs angibt, an den Richtliniensteuerungsregelserver (1, 1a) senden, wobei der eine oder die mehreren Gateway-Knoten eines von einem versorgenden Netzwerk-Gateway, SGW, (16), einem Paketdatennetzwerk-Gateway, PGW, (17) und einem Gateway-GPRS-Unterstützungsknoten, GGSN, (23) umfassen.

9. Netzwerkknoten (60, 13, 14, 16, 17, 23) eines versorgenden Kernnetzwerks zum Benachrichtigen eines Richtliniensteuerungsregelservers (1, 1a), der Richtlinien in Bezug auf eine Funkzugangsnetzwerk, RAN, handhabt, von einem freigegebenen RAN (45), das zum Verbinden einer Benutzereinrichtung, UE, (12) mit dem versorgenden Kernnetzwerk verwendet wird, wobei der Netzwerkknoten einen Prozessor (620) und einen Speicher (600) umfasst, wobei der Speicher Anweisungen (604) enthält, die vom Prozessor (622, 626), ausgeführt werden können, wodurch der Netzwerkknoten ausgelegt ist zum:
Empfangen einer Anforderung zur Herstellung oder Modifizierung einer Netzwerkverbindung zwischen einer UE (12) und einem versorgenden Kernnetzwerk durch ein RAN;
Bestimmen, dass das RAN ein freigegebenes RAN (45) ist; und
Senden eines Indikators, der eine RAN-Freigabe, eine Kennung des versorgenden Kernnetzwerks und eine Kennung des RANs angibt, an einen Richtliniensteuerungsregelserver (1, 1a).

10. Netzwerkknoten nach Anspruch 9, der ferner ausgelegt ist zum:
Empfangen eines Ereignisauslösers, der Benachrichtigungen eines RAN-Wechsels abonniert, vom Richtliniensteuerungsregelserver (1, 1a); und
Überwachen, ob die Kennung des RANs wechselt, um den Richtliniensteuerungsregelserver von einer neuen Kennung des RANs zu benachrichtigen.

11. Netzwerknoten nach einem der Ansprüche 9 oder 10, wobei der Netzwerkknoten eines von einer Mobilitätsverwaltungsinstanz, MME, (13), einem versorgenden GPRS-Unterstützungsknoten, der eine sogenannte Gn/Gp-Schnittstelle unterstützt, im Folgenden SGSN, (14), und einem versorgenden GPRS-Unterstützungsknoten, der eine sogenannte S4-Schnittstelle unterstützt, im Folgenden S4-SGSN, (14), einem versorgenden Netzwerk-Gateway, SGW, (16), einem Paketdatennetzwerk-Gateway, PGW, (17) und einem Gateway-GPRS-Unterstützungsknoten, GGSN, (23) ist.

12. Netzwerkknoten (60, 13, 14, 16) nach einem der Ansprüche 9 bis 11, der ferner ausgelegt ist zum:
Empfangen einer Angabe mit der Anforderung, von einem RAN-Wechsel benachrichtigt zu werden, von einem Gateway-Knoten (16, 17, 23); und
Überwachen, ob die Kennung des RANs wechselt, um den Gateway-Knoten von einer neuen Kennung des RANs zu benachrichtigen.

13. Netzwerkknoten (60, 13, 14, 16) nach einem der Ansprüche 9 bis 12, wobei der Indikator, der die RAN-Freigabe, die Kennung des versorgenden Kernnetzwerks und der Kennung des RANs angibt, über eine direkte Schnittstelle (Sx, Gx) direkt vom Netzwerkknoten (60, 13, 14, 17, 23) an den Richtliniensteuerungsregelserver (1, 1a) gesendet wird.

14. Richtliniensteuerungsregelserver (1, 1a), der Richtlinien in Bezug auf ein Funkzugangsnetzwerk, RAN, (45) handhabt, wobei das RAN zum Verbinden einer Benutzereinrichtung, UE, (12) mit einem versorgenden Kernnetzwerk verwendet wird, wobei der Richtliniensteuerungsregelserver einen Prozessor (820) und einen Speicher (800) umfasst, wobei der Speicher Anweisungen (813) enthält, die vom Prozessor (822, 828) ausgeführt werden können, wodurch der Richtliniensteuerungsregelserver ausgelegt ist zum:
Empfangen eines Indikators, der eine RAN-Freigabe, eine Kennung des versorgenden Kernnetzwerks und eine Kennung des RANs angibt, von einem Netzwerkknoten (60) eines versorgenden Kernnetzwerks;
Bestimmen, dass Richtlinien in Bezug auf die Kennung des RANs vorhanden sind; und
Senden eines Ereignisauslösers, der Benachrichtigungen eines RAN-Wechsels abonniert, an eine Netzwerkvorrichtung (2, 2a), die Abonnements von Ereignissen handhabt.

15. Richtliniensteuerungsregelserver nach Anspruch 14, wobei die Netzwerkvorrichtung sich in mindestens einem von dem Netzwerkknoten (60, 13, 14) des versorgenden Kernnetzwerks oder einem Gateway-Knoten (17, 23) befindet.

16. Richtliniensteuerungsregelserver nach einem der Ansprüche 14 oder 15, wobei der Richtliniensteuerungsregelserver (1a) ein Server ist, der eine Richtlinien- und Abrechnungsregelfunktion, PCRF, (1) implementiert.

## Revendications

1. Procédé de notification d'un serveur de règles de commande de politique, qui gère des politiques relatives à un réseau d'accès radio, RAN, d'un RAN partagé (45) utilisé pour connecter un équipement d'utilisateur, UE, (12) à un réseau central de desserte, le procédé comprenant :
la réception (S-110, S-120, S-125, S-300), à un noeud de réseau (60) d'un réseau central de desserte, d'une demande d'établissement ou de modification d'une connexion de réseau entre un UE (12) et le réseau central de desserte par l'intermédiaire d'un RAN ;
la détermination (S-115, S-410, S-430), au noeud de réseau, que le RAN est un RAN partagé (45) ;
la transmission (S-120, S-125, S-130, S-320), du noeud de réseau (60) à un serveur de règles de commande de politique (1, 1a) gérant des politiques relatives au RAN partagé, d'un indicateur indiquant un partage de RAN, d'un identifiant du réseau central de desserte et d'un identifiant du RAN ;
la détermination (S-135, S-225, S-340), au serveur de règles de commande de politique (1, 1a), qu'il existe des politiques relatives à l'identifiant du RAN ;
la transmission (S-140, S-230, S-350), du serveur de règles de commande de politique à un dispositif de réseau (2, 2a) gérant des abonnements à des événements, d'un déclenchement d'événement s'abonnant à des notifications d'un changement de RAN ; et
la surveillance (S-145, S-235, S-370), au dispositif de réseau, si l'identifiant du RAN change afin de notifier un nouvel identifiant du RAN au serveur de règles de commande de politique.

2. Procédé selon la revendication 1, dans lequel le serveur de règles de commande de politique (1a) est un serveur mettant en oeuvre une fonction de règles de facturation et de politique, PCRF, (1).

3. Procédé selon l'une quelconque des revendications 1 et 2, dans lequel le noeud de réseau (60) est l'un quelconque d'une entité de gestion de mobilité, MME, (13), d'un noeud de prise en charge de GPRS de desserte prenant en charge une interface Gn/Gp, SGSN, (14), d'un noeud de prise en charge de GPRS de desserte prenant en charge une interface S4, S4-SGSN, (14), d'une passerelle de réseau de desserte, SGW, (16), d'une passerelle de réseau de données en paquets, PGW, (17), et d'un noeud de prise en charge de GPRS de passerelle, GGSN, (23).

4. Procédé selon l'une quelconque des revendications 1 à 3, dans lequel l'indicateur indiquant le partage de RAN, l'identifiant du réseau central de desserte et l'identifiant du RAN sont transmis du noeud de réseau (60, 13, 14, 16) au serveur de règles de commande de politique par l'intermédiaire d'un ou plusieurs noeuds de passerelle (16, 17, 23), dans lequel les un ou plusieurs noeuds de passerelle comprennent n'importe lesquels d'une passerelle de réseau de desserte, SGW, (16), d'une passerelle de réseau de données en paquets, PGW, (17), et d'un noeud de prise en charge de GPRS de passerelle, GGSN, (23).

5. Procédé selon la revendication 4, dans lequel le dispositif de réseau (2, 2a) réside dans un noeud de passerelle (17, 23), et le procédé comprend en outre la transmission, du dispositif de réseau au noeud de réseau (60, 13, 14), d'une indication demandant une notification d'un changement de RAN.

6. Procédé selon l'une quelconque des revendications 1 à 3, dans lequel l'indicateur indiquant le partage de RAN, l'identifiant du réseau central de desserte et l'identifiant du RAN sont directement transmis du noeud de réseau (13, 14, 17, 23) au serveur de règles de commande de politique (1, 1a) par l'intermédiaire d'une interface directe (Sx, Gx).

7. Système de notification d'un serveur de règles de commande de politique, qui gère des politiques relatives à un réseau d'accès radio, RAN, d'un RAN partagé (45) utilisé pour connecter un équipement d'utilisateur, UE, (12) à un réseau central de desserte, le système comprenant :
un noeud de réseau (60) d'un réseau central de desserte configuré pour :
la réception d'une demande d'établissement ou de modification d'une connexion de réseau entre un UE (12) et le réseau central de desserte par l'intermédiaire d'un RAN ;
la détermination que le RAN est un RAN partagé (45) ;
la transmission, à destination d'un serveur de règles de commande de politique (1, 1a) gérant des politiques relatives au RAN partagé, d'un indicateur indiquant un partage de RAN, d'un identifiant du réseau central de desserte et d'un identifiant du RAN ;
un serveur de règles de commande de politique (1, 1a) configuré pour :
la réception, en provenance du noeud de réseau (60) du réseau central de desserte, de l'indicateur indiquant le partage de RAN, de l'identifiant du réseau central de desserte et de l'identifiant du RAN ;
la détermination qu'il existe des politiques relatives à l'identifiant du RAN ;
la transmission, à destination d'un dispositif de réseau (2, 2a) gérant des abonnements à des événements, d'un déclenchement d'événement s'abonnant à des notifications d'un changement de RAN ; et
un dispositif de réseau (2, 2a) configuré pour :
la réception, en provenance du serveur de règles de commande de politique (1, 1a), du déclenchement d'événement s'abonnant à des notifications d'un changement de RAN ; et
la surveillance si l'identifiant du RAN change afin de notifier un nouvel identifiant du RAN au serveur de règles de commande de politique.

8. Système selon la revendication 7, comprenant en outre un ou plusieurs noeuds de passerelle (16, 17, 23) configurés pour la réception, en provenance du noeud de réseau (60, 13, 14, 16), de l'indicateur indiquant le partage de RAN, l'identifiant du réseau central de desserte et l'identifiant du RAN et la transmission, à destination du serveur de règles de commande de politique (1, 1a), de l'indicateur indiquant le partage de RAN, l'identifiant du réseau central de desserte et l'identifiant du RAN, dans lequel les un ou plusieurs noeuds de passerelle comprennent n'importe lesquels d'une passerelle de réseau de desserte, SGW, (16), d'une passerelle de réseau de données en paquets, PGW, (17), et d'un noeud de prise en charge de GPRS de passerelle, GGSN, (23).

9. Noeud de réseau (60, 13, 14, 16, 17, 23) d'un réseau central de desserte pour la notification d'un serveur de règles de commande de politique (1, 1a), qui gère des politiques relatives à un réseau d'accès radio, RAN, d'un RAN partagé (45) utilisé pour connecter un équipement d'utilisateur, UE, (12) au réseau central de desserte, le noeud de réseau comprenant un processeur (620) et une mémoire (600), ladite mémoire contenant des instructions (604) exécutables par ledit processeur (622, 626), de telle manière que ledit noeud de réseau soit opérationnel pour :
la réception d'une demande d'établissement ou de modification d'une connexion de réseau entre un UE (12) et un réseau central de desserte par l'intermédiaire d'un RAN ;
la détermination que le RAN est un RAN partagé (45) ; et
la transmission, à destination d'un serveur de règles de commande de politique (1, 1a), d'un indicateur indiquant un partage de RAN, d'un identifiant du réseau central de desserte et d'un identifiant du RAN.

10. Noeud de réseau selon la revendication 9, en outre opérationnel pour :
la réception, en provenance du serveur de règles de commande de politique (1, 1a), d'un déclenchement d'événement s'abonnant à des notifications d'un changement de RAN ; et
la surveillance si l'identifiant du RAN change afin de notifier un nouvel identifiant du RAN au serveur de règles de commande de politique.

11. Noeud de réseau selon l'une quelconque des revendications 9 et 10, dans lequel le noeud de réseau est l'un quelconque d'une entité de gestion de mobilité, MME, (13), d'un noeud de prise en charge de GPRS de desserte prenant en charge une interface Gn/Gp, SGSN, (14), d'un noeud de prise en charge de GPRS de desserte prenant en charge une interface S4, S4-SGSN, (14), d'une passerelle de réseau de desserte, SGW, (16), d'une passerelle de réseau de données en paquets, PGW, (17), et d'un noeud de prise en charge de GPRS de passerelle, GGSN, (23).

12. Noeud de réseau (60, 13, 14, 16) selon l'une quelconque des revendications 9 à 11, en outre opérationnel pour :
la réception, en provenance d'un noeud de passerelle (16, 17, 23), d'une indication demandant d'être notifié d'un changement de RAN ; et
la surveillance si l'identifiant du RAN change afin de notifier un nouvel identifiant du RAN au noeud de passerelle.

13. Noeud de réseau (60, 13, 14, 16) selon l'une quelconque des revendications 9 à 12, dans lequel l'indicateur indiquant le partage de RAN, l'identifiant du réseau central de desserte et l'identifiant du RAN sont transmis directement du noeud de réseau (60, 13, 14, 17, 23) au serveur de règles de commande de politique (1, 1a) par l'intermédiaire d'une interface directe (Sx, Gx).

14. Serveur de règles de commande de politique (1, 1a) gérant des politiques relatives à un réseau d'accès radio, RAN, (45), le RAN étant utilisé pour connecter un équipement d'utilisateur, UE, (12) à un réseau central de desserte, le serveur de règles de commande de politique comprenant un processeur (820) et une mémoire (800), la mémoire contenant des instructions (813) exécutables par le processeur (822, 828), de telle manière que ledit serveur de règles de commande de politique soit opérationnel pour :
la réception, en provenance d'un noeud de réseau (60) d'un réseau central de desserte, d'un indicateur indiquant un partage de RAN, un identifiant du réseau central de desserte, et un identifiant du RAN ;
la détermination qu'il existe des politiques relatives à l'identifiant du RAN ; et
la transmission, à destination d'un dispositif de réseau (2, 2a) gérant des abonnements à des événements, d'un déclenchement d'événement s'abonnant à des notifications d'un changement de RAN.

15. Serveur de règles de commande de politique selon la revendication 14, dans lequel le dispositif de réseau réside dans au moins l'un du noeud de réseau (60, 13, 14) du réseau central de desserte et d'un noeud de passerelle (17, 23).

16. Serveur de règles de commande de politique selon l'une quelconque des revendications 14 et 15, dans lequel le serveur de règles de commande de politique (1a) est un serveur mettant en oeuvre une fonction de règles de facturation et de politique, PCRF, (1).
